(19) Europäisches Patentamt
European Patent Office
Office européen des brevets

(11) EP 1 409 581 B1

(12) **FASCICULE DE BREVET EUROPEEN**

(45) Date de publication et mention de la délivrance du brevet:
**09.09.2009 Bulletin 2009/37**

(21) Numéro de dépôt: **02751063.5**

(22) Date de dépôt: **24.06.2002**

(51) Int Cl.:
***C08K 13/02*** *(2006.01)* ***C08L 21/00*** *(2006.01)*
***C07F 7/00*** *(2006.01)* ***B60C 1/00*** *(2006.01)*
***C08J 3/00*** *(2006.01)*

(86) Numéro de dépôt international:
**PCT/EP2002/006954**

(87) Numéro de publication internationale:
**WO 2003/002653 (09.01.2003 Gazette 2003/02)**

# (54) COMPOSITION DE CAOUTCHOUC POUR PNEUMATIQUE COMPORTANT UN AGENT DE COUPLAGE A FONCTION POLYTHIOSULFENAMIDE

KAUTSCHUKZUSAMMENSETZUNG FÜR REIFEN, DIE EIN KUPPLUNGSMITTEL DER POLYTHIOSULFENAMID-GRUPPE ENTHÄLT

RUBBER COMPOSITION FOR TYRE COMPRISING A COUPLING AGENT WITH POLYTHIOSULPHENAMIDE FUNCTION

(84) Etats contractants désignés:
**AT BE CH CY DE DK ES FI FR GB GR IE IT LI LU MC NL PT SE TR**

(30) Priorité: **28.06.2001 FR 0108786**

(43) Date de publication de la demande:
**21.04.2004 Bulletin 2004/17**

(73) Titulaires:
- **Société de Technologie Michelin**
  **63000 Clermont-Ferrand (FR)**
- **Michelin Recherche et Technique S.A.**
  **1763 Granges-Paccot (CH)**

(72) Inventeurs:
- **ARAUJO-DA-SILVA, José-Carlos**
  **F-63430 Pont du Chateau (FR)**
- **BLANCHARD, Christiane**
  **Chateaugay (FR)**
- **MIGNANI, Gérard**
  **F-69008 Lyon (FR)**
- **PAGANO, Salvatore**
  **F-63400 Chamalières (FR)**
- **TARDIVAT, Jean-Claude**
  **Clermont-Ferrand (FR)**

(74) Mandataire: **Ribière, Joel**
**M.F.P. Michelin,**
**SGD/LG/PI - F35 - Ladoux**
**63040 Clermont-Ferrand Cedex 9 (FR)**

(56) Documents cités:
**EP-A- 0 074 632**
**EP-A- 0 945 456**
**EP-A- 1 063 259**
**US-A- 5 827 912**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention se rapporte aux compositions d'élastomères diéniques renforcées d'une charge blanche ou inorganique, destinées particulièrement à la fabrication de pneumatiques ou de produits semi-finis pour pneumatiques, notamment de bandes de roulement de ces pneumatiques.

Elle est plus particulièrement relative à l'utilisation, dans de telles compositions, d'agents de liaison pour le couplage de charges inorganiques renforçantes et d'élastomères diéniques.

On sait, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues. Ces interactions tendent d'autre part à augmenter la viscosité à l'état cru des compositions de caoutchouc et donc à rendre leur mise en oeuvre ("*processability*") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi que des propriétés d'adhérence élevées sur sol mouillé, enneigé ou verglacé.

De telles compositions de caoutchouc, comportant des charges inorganiques renforçantes par exemple du type silices ou alumines, ont par exemple été décrites dans les brevets ou demandes de brevet EP 501 227 ou US 5 227 425, EP 735 088 ou US 5 852 099, EP 810 258 ou US 5 900 449, EP 881 252, WO99/02590, WO99/06480, WO00/05300, WO00/05301, WO02/10269.

On citera en particulier les documents EP 501 227, EP 735 088 ou EP 881 252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans la demande EP 810 258, avec, à titre de charges inorganiques renforçantes, des alumines spécifiques à dispersibilité élevée.

L'utilisation de ces charges inorganiques spécifiques, hautement dispersibles, a certes réduit les difficultés de mise en oeuvre à l'état cru des compositions de caoutchouc les contenant, mais cette mise en oeuvre reste néanmoins plus difficile que pour les compositions chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

Par agent de "couplage" (charge inorganique/élastomère), on entend de manière connue un composé apte à établir une connexion suffisante, de nature chimique et/ou physique, entre la charge inorganique et l'élastomère diénique ; un tel agent de couplage, au moins bifonctionnel, a par exemple comme formule générale simplifiée « Y-T-X », dans laquelle:

- Y représente un groupe fonctionnel (fonction "Y ") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- T représente un groupe organique divalent permettant de relier Y et X.

Les agents de couplage ne doivent en particulier pas être confondus avec de simples agents de recouvrement

de charge inorganique qui de manière connue peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans de nombreux documents, les plus connus étant des organosilanes bifonctionnels porters de trois fonctions organoxysilyle (notamment alkoxysilyle) à titre de fonction Y, et, à titre de fonction X, d'au moins une fonction capable de réagir avec l'élastomère diénique telle que notamment un groupe fonctionnel soufré (i.e., comportant du soufre).

Ainsi, il a été proposé dans les demandes de brevet FR 2 094 859 ou GB 1 310 379 d'utiliser un agent de couplage mercaptoalkoxysilane pour la fabrication de bandes de roulement de pneumatiques. Il fut rapidement mis en évidence et il est aujourd'hui bien connu que les mercaptoalkoxysilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions "X") conduisant très rapidement au cours de la préparation des compositions de caoutchouc, dans un mélangeur interne, à des vulcanisations prématurées encore appelées "grillage" (*"scorching"*), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR 2 206 330, US 3 873 489, US 4 002 594.

Pour remédier à cet inconvénient, il a été proposé de remplacer ces mercaptoalkoxysilanes par des alkoxysilanes polysulfurés, notamment des polysulfures de bis-(alkoxylsilylpropyle) tels que décrits dans de très nombreux documents (voir par exemple FR 2 149 339, FR 2 206 330, US 3 842 111, US 3 873 489, US 3 997 581). Parmi ces polysulfures, doit être cité notamment le tétrasulfure de bis 3-triéthoxysilylpropyle (en abrégé TESPT) ou le disulfure de bis 3-triéthoxysilylpropyle (en abrégé TESPD).

Ces alkoxysilanes polysulfurés, en particulier le TESPT, sont généralement considérés comme les produits apportant, pour des vulcanisats comportant une charge inorganique renforçante, en particulier de la silice, le meilleur compromis en termes de sécurité au grillage, de facilité de mise en oeuvre et de pouvoir renforçant. Ils sont à ce titre les agents de couplage les plus utilisés aujourd'hui dans les compositions de caoutchouc pour pneumatiques, même s'ils présentent comme inconvénients connus (voir par exemple brevets US 5 652 310, US 5 684 171, US 5 684 172) d'être relativement onéreux et, qui plus est, de devoir être utilisés le plus souvent dans des quantités relativement importantes.

Or, de manière inattendue, la Demanderesse a découvert lors de ses recherches que des agents de couplage spécifiques peuvent présenter des performances de couplage supérieures à celles des alkoxysilanes polysulfurés, notamment à celles du TESPT, dans les compositions de caoutchouc pour pneumatique.

Ces agents de couplage sont des composés organosiliciés qui ont comme caractéristique essentielle d'être porteurs, à titre de fonction X, d'un groupe fonctionnel polythiosulfénamide particulier. Ils ne posent pas par ailleurs les problèmes précités de grillage prématuré et ceux de mise en oeuvre liés à une viscosité trop importante des compositions de caoutchouc à l'état cru, inconvénients posés notamment par les mercaptosilanes.

En conséquence, un premier objet de l'invention concerne un pneumatique selon la revendication 1.

L'invention ainsi que ses avantages seront aisément compris à la lumière de la description et des exemples de réalisation qui suivent, ainsi que des figures relatives à ces exemples qui représentent :

- fig. 1 : des rhéogrammes (courbes de cuisson) enregistrés pour des compositions de caoutchouc utilisables dans des pneumatiques conformes ou non à l'invention;
- fig. 2 : des courbes de variation de module en fonction de l'allongement pour ces compositions de caoutchouc.

## I. MESURES ET TESTS UTILISES

Les compositions de caoutchouc sont caractérisées avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### I-2. Temps de grillage

Les mesures sont effectuées à 130°C, conformément à la norme française NF T 43-005 (1991). L'évolution de l'indice consistométrique en fonction du temps permet de déterminer le temps de grillage des compositions de

caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

1-3. Rhéométrie

Les mesures sont effectuées à 150°C avec un rhéomètre à chambre oscillante, selon la norme DIN 53529 - partie 3 (juin 1983). L'évolution du couple rhéométrique en fonction du temps (voir figure 1 annexée) décrit l'évolution de la rigidification de la composition par suite de la réaction de vulcanisation. Les mesures sont traitées selon la norme DIN 53529 - partie 2 (mars 1983) : $t_i$ est le délai d'induction, c'est-à-dire le temps nécessaire au début de la réaction de vulcanisation ; $t_\alpha$ (par exemple $t_{90}$ ou $t_{99}$) est le temps nécessaire pour atteindre une conversion de $\alpha$%, c'est-à-dire $\alpha$% (par exemple 90% ou 99%, respectivement) de l'écart entre les couples minimum et maximum. On mesure également la constante de vitesse de conversion notée K (exprimée en $min^{-1}$), d'ordre 1, calculée entre 30% et 80% de conversion, qui permet d'apprécier la cinétique de vulcanisation.

I-4. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés MA10), 100% d'allongement (notés MA100) et 300% d'allongement (notés MA300). On mesure également les contraintes à la rupture (en MPa) et les allongements à la rupture (en %). Toutes ces mesures de traction sont effectuées dans les conditions normales de température ($23 \pm 2$°C) et d'hygrométrie ($50 \pm 5$% d'humidité relative), selon la norme française NF T 40-101 (décembre 1979).

Un traitement des enregistrements de traction permet également de tracer la courbe de module en fonction de l'allongement (voir figure 2 annexée), le module utilisé ici étant le module sécant vrai mesuré en première élongation, calculé en se ramenant à la section réelle de l'éprouvette et non à la section initiale comme précédemment pour les modules nominaux.

**II. CONDITIONS DE REALISATION DE L'INVENTION**

Les compositions de caoutchouc des pneumatiques selon l'invention sont à base d'au moins chacun des constituants suivants: (i) un (au moins un) élastomère diénique, (ii) une (au moins une) charge inorganique à titre de charge renforçante, (iii) un (au moins un) composé organosilicié spécifique en tant qu'agent de couplage (charge inorganique/élastomère diénique).

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication de la composition, notamment au cours de sa vulcanisation.

II-1. Elastomère diénique

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;

(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène, et notamment ceux ayant une teneur en isoprène comprise entre 5% et 90% en poids et une température de transition vitreuse (Tg, mesurée selon norme ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition du pneumatique conforme à l'invention est choisi dans le groupe des élastomères diéniques fortement insaturés constitué par les polybutadiènes (BR), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition du pneumatique conforme à l'invention est particulièrement destinée à une bande de roulement, qu'il s'agisse d'un pneumatique neuf ou usagé (cas d'un rechapage).

Dans le cas d'un pneumatique pour véhicule tourisme, l'élastomère diénique est par exemple un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence préparé en solution (SSBR), est éventuellement utilisé en mélange avec un polybutadiène (BR) possédant de préférence plus de 90% de liaisons cis-1,4.

Dans le cas d'un pneumatique pour véhicule utilitaire, notamment pour véhicule Poids-lourd, l'élastomère diénique est notamment un élastomère isoprénique; par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%. Pour un tel pneumatique pour véhicule utilitaire, l'élastomère diénique peut être aussi constitué, en tout ou partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Les compositions peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Charge renforçante

La charge blanche ou inorganique utilisée à titre de charge renforçante peut constituer la totalité ou une partie seulement de la charge renforçante totale, dans ce dernier cas associée par exemple à du noir de carbone.

De préférence, dans les compositions de caoutchouc des pneumatiques conformes à l'invention, la charge inorganique renforçante constitue la majorité, i.e. plus de 50 % en poids de la charge renforçante totale, plus préférentiellement plus de 80 % en poids de cette charge renforçante totale.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type silice ($SiO_2$) ou alumine ($Al_2O_3$), ou un mélange de ces deux charges.

La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'alumine renforçante utilisée préférentiellement est une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm, telle que décrite dans la demande EP-A-0 810 258 précitée. Comme exemples non limitatifs de telles alumines renforçantes, on peut citer notamment les alumines "Baikalox" "A125", "CR125", "D65CR" de la société Baïkowski.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices et/ou d'alumines hautement dispersibles telles que décrites ci-dessus.

Lorsque les compositions de caoutchouc sont utilisées comme bandes de roulement de pneumatiques, la charge inorganique renforçante utilisée, en particulier s'il s'agit de silice, a de préférence une surface BET comprise entre 60 et 250 $m^2/g$, plus préférentiellement comprise entre 80 et 200 $m^2/g$.

La charge inorganique renforçante peut être également utilisée en coupage (mélange) avec du noir de carbone.

Comme noirs de carbone conviennent tous les noirs de carbone, notamment les noirs du type HAF, ISAF, SAF, conventionnellement utilisés dans les pneus et particulièrement dans les bandes de roulement des pneus. A titre d'exemples non limitatifs de tels noirs, on peut citer les noirs N115, N134, N234, N339, N347, N375.

La quantité de noir de carbone présente dans la charge renforçante totale peut varier dans de larges limites, cette quantité de noir de carbone étant préférentiellement inférieure à la quantité de charge inorganique renforçante présente dans la composition de caoutchouc.

Dans les pneumatiques conformes à l'invention, en particulier dans leurs bandes de roulement incorporant de telles compositions, on préfère utiliser, en faible proportion, un noir de carbone en association avec la charge inorganique renforçante, à un taux préférentiel compris entre 2 et 20 pce, plus préférentiellement compris dans un domaine de 5 à 15 pce. Dans les fourchettes indiquées, on a constaté qu'on pouvait bénéficier des propriétés colorantes (agent de pigmentation noire) et anti-UV des noirs de carbone, sans pénaliser par ailleurs les performances typiques apportées par la charge inorganique renforçante, à savoir faible hystérèse (résistance au roulement diminuée) et adhérence élevée sur sol mouillé, enneigé ou verglacé.

De manière préférentielle, le taux de charge renforçante totale (charge inorganique renforçante plus noir de carbone le cas échéant) est compris entre 10 et 200 pce, plus préférentiellement entre 20 et 150 pce, l'optimum étant différent selon les applications visées ; en effet, le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Pour les bandes de roulement de tels pneumatiques aptes à rouler à grande vitesse, la quantité de charge inorganique renforçante, en particulier s'il s'agit de silice, est de préférence comprise entre 30 et 140 pce, plus préférentiellement comprise dans un domaine de 50 à 120 pce.

Dans le présent exposé, la surface spécifique BET est déterminée de manière connue, selon la méthode de Brunauer-Emmett-Teller décrite dans "The Journal of the American Chemical Society" Vol. 60, page 309, février 1938 et correspondant à la norme française NF T 45-007

(novembre 1987) ; la surface spécifique CTAB est la surface externe déterminée selon la même norme NF T 45-007.

Enfin, l'homme du métier comprendra qu'à titre de charge équivalente de la charge inorganique renforçante décrite dans le présent paragraphe, pourrait être utilisée une charge organique renforçante, notamment un noir de carbone, recouvert au moins en partie d'une couche inorganique, par exemple de silice, nécessitant quant à elle l'utilisation d'un agent de couplage pour établir la liaison avec l'élastomère.

II-3. Agent de couplage (composé organosilicié)

Comme expliqué précédemment, un agent de couplage (charge inorganique/élastomère diénique) est, de manière connue, porteur d'au moins deux fonctions, notées ici "Y" et "X", lui permettant de pouvoir se greffer, d'une part sur la charge inorganique renforçante au moyen de la fonction Y, par exemple un groupe hydroxyle ou un groupe hydrolysable, d'autre part sur l'élastomère diénique au moyen de la fonction X, par exemple une fonction soufrée.

Une caractéristique essentielle du composé organosilicié polysilylé utilisé comme agent de couplage dans les pneumatiques conformes à l'invention est que ce composé est greffable sur l'élastomère au moyen d'un groupe soufré à fonction polythiosulfénamide, de formule:

$$\text{(I)} \qquad \equiv Si\text{-}A\text{-}S_x\text{-}NR^1R^2,$$

telle qu'énoncée en revendication 1.

On rappelle ici que par composé "organosilicié" (ou "organosilicique") doit être entendu, par définition, un composé organique renfermant au moins une liaison Carbone-Silicium. On comprendra que le composé de formule (I) ci-dessus, porteur d'au moins deux atomes de silicium différents (au moins un lié au groupe A, au moins un autre lié au groupe B), entre donc dans la catégorie des composés organosiliciés du type polysilylés. On notera d'autre part que lorsque $R^1$ est identique (dans sa formule générale) à $R^2$, alors le composé de formule (I) est porteur d'au moins trois atomes de silicium différents.

Dans la formule (I) ci-dessus, dans le cas où la voie de synthèse du composé considéré ne peut donner naissance qu'à une seule sorte de groupe polysulfuré, le nombre x est alors un nombre entier qui est égal à 2, 3 ou 4, de préférence égal à 2 ou 3.

Mais l'homme du métier comprendra aisément que ce nombre peut être un nombre moyen fractionnaire lorsque la voie de synthèse donne naissance à un mélange de groupes polysulfurés ayant chacun un nombre d'atomes de soufre différent ; dans un tel cas, le groupe polythiosulfénamide synthétisé est en fait constitué d'une distribution de polysulfures, allant du disulfure $S_2$ à des polysulfures plus lourds, centrée sur une valeur moyenne (en mole) des "x" (nombre fractionnaire) comprise entre 2 et 4, plus préférentiellement comprise entre 2 et 3.

Le groupe hydrocarboné monovalent représenté par $R^1$ peut être aliphatique, linéaire ou ramifié, ou carbocyclique, notamment aromatique ; il peut être substitué ou non substitué, saturé ou insaturé.

Dans le cas d'un groupe hydrocarboné aliphatique, ce dernier comprend notamment de 1 à 25 atomes de carbone, plus préférentiellement de 1 à 12 atomes de carbone.

A titre d'exemple de groupe hydrocarboné aliphatique saturé, on peut citer les groupes alkyle tels que méthyle, éthyle, propyle, isopropyle, butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle.

Les groupes hydrocarbonés aliphatiques insaturés utilisables comprennent une ou plusieurs insaturations, de préférence une, deux ou trois insaturations de type éthylénique (double liaison) ou/et acétylénique (triple liaison). Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Par radical carbocyclique, est entendu un radical monocyclique ou polycyclique, éventuellement substitué, de préférence en $C_3$-$C_{50}$. De façon avantageuse, il s'agit d'un radical en $C_3$-$C_{18}$ de préférence mono-, bi- ou tricyclique. Lorsque le radical carbocyclique comprend plus d'un noyau cyclique (cas des carbocycles polycycliques); les noyaux cycliques sont condensés deux à deux. Deux noyaux condensés peuvent être orthocondensés ou péricondensés.

Le radical carbocyclique peut comprendre, sauf indications contraires, une partie saturée et/ou une partie aromatique et/ou une partie insaturée.

Des exemples de radicaux carbocycliques saturés sont les groupes cycloalkyle. De manière préférée, les groupes cycloalkyle sont en $C_3$-$C_{18}$, mieux encore en $C_5$-$C_{10}$. On peut citer notamment les radicaux cyclopentyle, cyclohexyle, cycloheptyle, cyclooctyle, adamantyle ou norbomyle.

Le carbocycle insaturé ou toute partie insaturée de type carbocyclique présente une ou plusieurs insaturation éthyléniques, de préférence une, deux ou trois. Il comporte avantageusement de 6 à 50 atomes de carbone, mieux encore de 6 à 20, par exemple de 6 à 18 atomes de carbone.

Des exemples de carbocycles insaturés sont les groupes cycloalcényles en $C_6$-$C_{10}$. Des exemples de radicaux carbocycliques aromatiques sont les groupes aryle en $C_6$-$C_{18}$ et notamment phényle, naphtyle, anthryle et phénanthryle.

Un groupe présentant à la fois une partie aliphatique hydrocarbonée et une partie carbocyclique telles que définies ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alkoxyles dans lesquels la partie alkyle est préférentiellement telle que définie ci-dessus.

$R^1$ comporte de préférence de 1 à 25 atomes de carbone. Selon un mode de réalisation particulièrement préférentiel, $R^1$ est choisi dans le groupe constitué par l'hydrogène, les alkyles, linéaires ou ramifiés, en $C_1$-$C_8$, les cycloalkyles en $C_5$-$C_{10}$, les aryles en $C_6$-$C_{18}$, les ($C_6$-$C_{18}$)aryl-($C_1$-$C_8$)alkyles et $R^2$. Plus préférentiellement encore, $R^1$ est choisi dans le groupe constitué par hydrogène, méthyle, éthyle, propyle, isopropyle, butyle, hexyle, benzyle, cyclohexyle, phényle, benzyle et $R^2$.

Les groupes de liaison divalents A et B, identiques ou différents, peuvent être substitués ou interrompus par un ou plusieurs hétéroatomes, choisis en particulier parmi S, O et N.

Ainsi, selon un mode de réalisation particulièrement préférentiel de l'invention, le groupe soufré de formule (I) répond aux formules particulières (II) (dans ce cas, A = B = Z) ou (III) (dans ce cas, A = Z et B = - $S_y$ - Z -) qui suivent:

(II) $\equiv Si\text{-}Z\text{-}S_x\text{-}NR^1\text{-}Z\text{-}Si\equiv$,

ou:

(III) $\equiv Si\text{-}Z\text{-}S_x\text{-}NR^1\text{-}S_y\text{-}Z\text{-}Si\equiv$,

dans lesquelles les groupements Z, identiques ou différents, représentent un alkylène en $C_1$-$C_8$, et y , identique à ou différent de x, est un nombre entier ou fractionnaire de 2 à 4.

Dans ces formules (II) et (III), Z représente plus préférentiellement une chaîne alkylène en $C_1$-$C_4$, notamment méthylène, éthylène ou propylène, plus préférentiellement encore le propylène.

Dans les formules (I), (II) et (III) supra, $R^2$ représente avantageusement le groupement:

$-B\text{-}SiR^3_{(3\text{-}a)}(OR^4)_a$,

dans lequel:

- $R^3$ représente un groupe hydrocarboné monovalent;
- $R^4$ représente l'hydrogène ou un groupe hydrocarboné monovalent, identique à ou différent de $R^3$;
- a est un entier égal à 1, 2 ou 3;
- avec notamment B = Z dans la cas de la formule particulière (II), ou B = $-S_y$-Z-dans le cas de la formule particulière (III).

Les radicaux $R^3$ et $R^4$, identiques ou différents, sont des groupes hydrocarbonés choisis notamment parmi les groupes hydrocarbonés aliphatiques, saturés ou insaturés, les groupes carbocycliques, saturés, insaturés ou/et aromatiques, monocycliques ou polycycliques, et les groupes présentant une partie hydrocarbonée aliphatique, saturée ou insaturée, et une partie carbocyclique telle que définie ci-dessus, comportant de préférence de 1 à 18 atomes de carbone, ces différents groupes pouvant être substitués ou non substitués.

Les radicaux $R^3$, identiques ou différents s'ils sont plusieurs, représentent de préférence un alkyle, un cycloalkyle ou un aryle. Il sont plus préférentiellement choisis dans le groupe constitué par les alkyles en $C_1$-$C_8$, les cycloalkyles en $C_5$-$C_{10}$ (notamment cyclohexyle) et phényle. Plus préférentiellement encore, $R^3$ est choisi dans le groupe constitué par les alkyles en $C_1$-$C_6$ (notamment méthyle, éthyle, propyle, isopropyle).

Les radicaux $R^4$, identiques ou différents s'ils sont plusieurs, représentent de préférence un alkyle, un cycloalkyle, un acyle ou un aryle. Ils sont plus préférentiellement choisis dans le groupe constitué par les alkyles en $C_1$-$C_8$, éventuellement halogénés et/ou éventuellement substitués par un ou plusieurs ($C_2$-$C_8$) alkoxy, les acyles en $C_2$-$C_9$, éventuellement halogénés et/ou éventuellement substitués par un ou plusieurs ($C_2$-$C_8$)alkoxy, les cycloalkyles en $C_5$-$C_{10}$ et les aryles en $C_6$-$C_{18}$. Plus préférentiellement encore, $R^4$ est choisi dans le groupe constitué par les alkyles en $C_1$-$C_8$ (notamment méthyle, éthyle; n-propyle, isopropyle, n-butyle, β-cloropropyle, β-cloroéthyle), éventuellement substitués par un ou plusieurs ($C_2$-$C_8$)alkoxy (notamment méthoxy, éthoxy, propoxy, isopropoxy), les cycloalkyles en $C_5$-$C_{10}$ et phényle.

Selon le meilleur mode de réalisation connu, $R^3$ et $R^4$, identiques ou différents, sont choisis tous deux (si a ≠ 3) parmi les alkyles en $C_1$-$C_4$, en particulier parmi méthyle et éthyle.

L'homme du métier saura adapter la nature de la fonction Y au composé organosilicié particulier considéré sur lequel est greffé, par l'intermédiaire du groupe de liaison A, le groupe polythiosulfénamide, cette fonction Y pouvant être différente, par exemple un groupe hydroxyle ou hydrolysable, selon le type de composé organosilicié considéré.

Sans que ce mode de réalisation soit limitatif, ce composé organosilicié est préférentiellement un composé silane porteur, à titre de fonction Y, d'un ou plusieurs (maximum égal à 3) groupes (OR) fixés sur un atome de Silicium, R représentant l'hydrogène ou un groupe hydrocarboné monovalent, linéaire ou ramifié (notamment alkyle).

Ainsi, à titre de composé organosilicié convenant particulièrement à l'invention, peut être utilisé un silane-polythiosulfénamide polysilylé répondant à la formule générale:

(IV) $(R^6O)_bR^5_{(3-b)}Si\text{-}A\text{-}S_x\text{-}NR^1\text{-}B\text{-}SiR^3_{(3-a)}(OR^4)_a$,

dans laquelle:

- $R^5$ représente un groupe hydrocarboné monovalent;
- $R^6$ représente l'hydrogène ou un groupe hydrocarboné monovalent, identique à ou différent de $R^5$;
- b est un entier égal à 1, 2 ou 3;
- $R^5$, $R^6$ et b pouvant être, respectivement, identiques à ou différents de $R^3$, $R^4$ et a.

Dans la formule (IV) ci-dessus, $R^5$, $R^6$ et b ont les significations générales et préférentielles données supra, respectivement, pour $R^3$, $R^4$ et a. En particulier, $R^5$ est plus préférentiellement choisi dans le groupe constitué par les alkyles en $C_1$-$C_8$, les cycloalkyles en $C_5$-$C_{10}$ et phényle; $R^6$ est plus préférentiellement choisi dans le groupe constitué par les alkyles en $C_1$-$C_6$, les alkoxyalkyles en $C_2$-$C_6$, les cycloalkyles en $C_5$-$C_8$ et phényle.

Selon le meilleur mode de réalisation connu, $R^5$ et $R^6$, identiques ou différents, sont choisis parmi les alkyles en $C_1$-$C_6$, plus préférentiellement encore parmi les alkyles en $C_1$-$C_4$.

L'homme du métier comprendra aisément qu'un composé organosilicié répondant à cette formule (IV) comporte une première fonction "Y" [symbolisée par les 1 à 3 groupe(s) $(OR^6)_b$ fixés au premier atome de Silicium] reliée, par l'intermédiaire du groupe de liaison A, au groupe fonctionnel polythiosulfénamide de formule (I) [fonction "X" symbolisée par - $S_x$ - N $R^1$ $R^2$], ce dernier ayant pour caractéristique supplémentaire avantageuse de comporter au moins une seconde fonction "Y" [symbolisée par les 1 à 3 groupe(s) $(OR^4)_a$ relié(s) au second atome de Silicium].

A titre de composés organosiliciés plus préférentiels utilisables dans les compositions, on citera notamment les silanes-polythiosulfénamide polysilylés de formule (IV) répondant à l'une des formules particulières ci-dessous:

(V) $(R^6O)_bR^5_{(3-b)}Si\text{-}Z\text{-}S_x\text{-}NR^1\text{-}Z\text{-}SiR^3_{(3-a)}(CR^4)_a$,

ou:

(VI) $(R^6O)_bR^5_{(3-b)}Si\text{-}Z\text{-}S_x\text{-}NR^1\text{-}S_y\text{-}Z\text{-}SiR^3_{(3-a)}(OR^4)_a$

dans laquelle les groupements Z, identiques ou différents, représentent notamment un alkylène en $C_1$-$C_4$, les radicaux $R^3$, $R^4$, $R^5$ et $R^6$ représentent notamment un alkyle en $C_1$-$C_3$ et x et y ont les définitions données supra, plus particulièrement les silanes-dithiosulfénamide pour lesquels x est égal à 2, et y, le cas échéant, est aussi égal à 2.

Dans ces formules (V) et (VI), Z représente plus préférentiellement une chaîne alkylène en $C_1$-$C_4$, notamment méthylène, éthylène ou propylène, plus préférentiellement encore le propylène; les radicaux $R^3$, $R^4$, $R^5$ et $R^6$, identiques ou différents, représentent plus préférentiellement un alkyle en $C_1$-$C_3$, en particulier méthyle ou éthyle.

Parmi les composés organosiliciés de formule (V), on citera plus particulièrement ceux pour lesquels $R^1$ est choisi dans le groupe constitué par hydrogène, méthyle, éthyle, propyle, isopropyle, hexyle, benzyle, cyclohexyle et phényle, comme par exemple:

- la N-(3'-triméthoxysilylpropyldithio)-3-triéthoxysilylpropylamine (formule V-1):

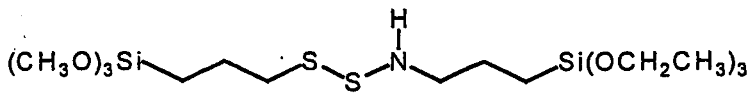

- la N-(3'-triéthoxysilylpropyldithio)-3-triéthoxysilylpropylamine (formule (V-2):

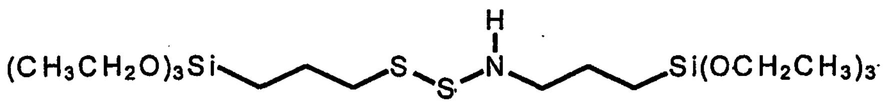

- la N-méthyl-N-(3'-triéthoxysilylpropyldithio)-3-triméthoxysilylpropylamine de formule (V-3) (Et = éthyle ; Me = méthyle):

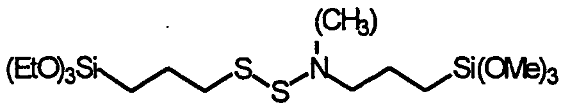

Selon un mode de réalisation particulièrement préférentiel de l'invention, le silane-polythiosulfénamide polysilylé est un silane du type symétrique (x = y), c'est-à-dire comportant le même nombre (2, 3 ou 4) d'atomes de S de part et d'autre de l'atome de N, comme décrit par la formule (VI) supra.

Dans le cas plus particulier où, dans cette formule (VI), d'une part $R^5$, $R^6$ et b sont, respectivement, identiques à $R^3$, $R^4$ et a, d'autre part les deux enchaînements Z sont les mêmes, un tel silane, rigoureusement symétrique, a alors pour formule particulièrement préférentielle:

(VII) $[(R^4O)_aR^3_{(3-a)}Si\text{-}Z\text{-}S_x\text{-}]_2NR^1$

Dans cette formule (VII), plus préférentiellement encore, $R^1$ est choisi dans le groupe constitué par hydrogène, méthyle, éthyle, propyle, isopropyle, hexyle, benzyle, cyclohexyle et phényle ; Z représente une chaîne alkylène en $C_1$-$C_4$, plus préférentiellement le propylène ; les radicaux $R^3$ et $R^4$, identiques ou différents si $R^3$ est présent ($a \neq 3$) représentent plus particulièrement encore un alkyle en $C_1$-$C_3$, notamment le méthyle ou l'éthyle ; x est plus préférentiellement égal à 2.

A titre d'exemples de composés organosiliciés présentant une structure de formule (VII) dans laquelle x = 2, on citera par exemple:

- la N,N-bis(3-triméthoxysilylpropyldithio)cyclohexylamine de formule (VII-1):

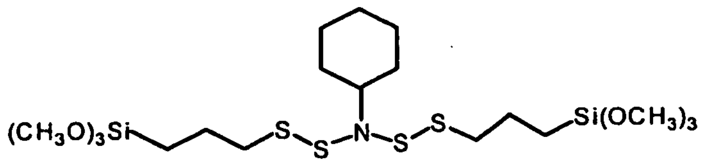

- la N,N-bis(3-triéthoxysilylpropyldithio)cyclohexylamine de formule (VII-2):

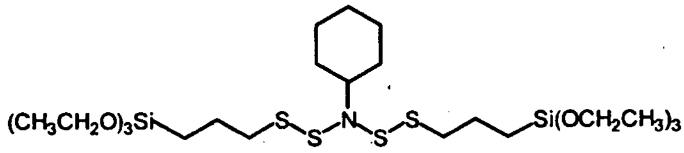

- la N,N-bis(3-triméthoxysilylpropyldithio)-3-triéthoxysilylpropylamine de formule (VII-3):

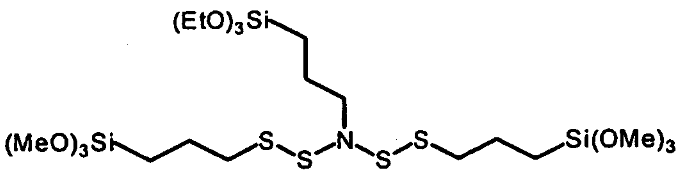

Les agents de couplage polyfonctionnels ci-dessus, porteurs d'un groupe polythiosulfénamide, ont montré une très bonne réactivité vis-à-vis des élastomères diéniques utilisés dans les compositions de caoutchouc pour pneumatiques, et se sont révélés suffisamment efficaces à eux seuls pour le couplage de tels élastomères et d'une charge inorganique renforçante telle que silice. Sans que ceci soit limitatif, ils peuvent avantageusement constituer le seul agent de couplage présent dans les compositions de caoutchouc des pneumatiques de l'invention.

De manière à tenir compte des différences de surface spécifique et de densité des charges inorganiques renforçantes susceptibles d'être utilisées, ainsi que des masses molaires des agents de couplage spécifiquement utilisés, il est préférable de déterminer le taux optimal d'agent de couplage en moles par mètre carré de charge inorganique renforçante, pour chaque charge inorganique renforçante utilisée ; ce taux optimal est calculé à partir du rapport pondéral [agent de couplage/charge inorganique-renforçante], de la surface BET de la charge et de la masse molaire de l'agent de couplage (notée M ci-après), selon la relation connue suivante:

$$(\text{moles/m}^2 \text{ charge inorganique}) = [\text{agent de couplage/charge inorganique}]\ (1/\text{BET})\ (1/M)$$

Ainsi, préférentiellement, la quantité d'agent de couplage utilisée dans les compositions conformes à l'invention est comprise entre $10^{-7}$ et $10^{-5}$ moles par $m^2$ de charge inorganique renforçante. Plus préférentiellement encore, la quantité d'agent de couplage est comprise entre $5.10^{-7}$ et $5.10^{-6}$ moles par mètre carré de charge inorganique totale.

Compte tenu des quantités exprimées ci-dessus, de manière générale, la teneur en agent de couplage sera de préférence supérieure à 1 pce, plus préférentiellement comprise entre 2 et 20 puce. En dessous des minima indiqués l'effet risque d'être insuffisant, alors qu'au delà du maximum préconisé on n'observe généralement plus d'amélioration du couplage, alors que les coûts de la composition augmentent ; pour ces différentes raisons, cette teneur en agent de couplage est encore plus préférentiellement comprise entre 3 et 12 pce.

L'homme du métier saura ajuster cette teneur en agent de couplage en fonction de l'application visée, par exemple de la partie du pneumatique à laquelle est destinée la composition de l'invention, de la nature de l'élastomère diénique, de la quantité de charge inorganique renforçante utilisée et de la nature du composé organosilicié considéré.

Bien entendu, afin de réduire les coûts des compositions de caoutchouc, il est souhaitable d'en utiliser le moins possible, c'est-à-dire le juste nécessaire pour un couplage suffisant entre l'élastomère diénique et la charge inorganique renforçante. Son efficacité permet, dans un grand nombre de cas, d'utiliser l'agent de couplage à un taux préférentiel représentant entre 0,5% et 20% en poids par rapport à la quantité de charge inorganique renforçante; des taux inférieurs à 15%, notamment inférieurs à 10%, sont plus particulièrement préférés.

Enfin, on notera que le composé organosilicié précédemment décrit pourrai être préalablement greffé (via la fonction "Y") sur la charge inorganique renforçante, la charge ainsi "précouplée" pouvant être liée ultérieurement à l'élastomère diénique, par l'intermédiaire de la fonction libre "X".

II-4. Synthèse de l'agent de couplage (composé organosilicié)

A titre d'exemple, des composés organosiliciés tels que décrits précédemment peuvent être préparés selon les voies de synthèse préférées indiquées ci-après (méthodes notées A, B ou C).

A) Méthode "A"

Les composés organosiliciés polysilylés de formule générale (IV) (formules particulières (V), (VI) et (VII) incluses) dans laquelle x = 2 (composés organosiliciés à fonction dithiosulfénamide) peuvent être obtenus notamment par réaction d'un halogénure de disulfure de formule:

(VIII) $(R^6O)_bR^5_{(3-b)}Si\text{-}A\text{-}S\text{-}S\text{-}Hal$

dans laquelle A, $R^5$, $R^6$ et b sont tels que définis supra et Hal représente un halogène (brome, chlore, fluor ou iode, de préférence chlore), sur l'amine appropriée de formule:

(IX) $HNR^1R^2$

dans laquelle $R^1$ et $R^2$ sont tels que définis supra, en présence d'une base, de préférence une base organique.

Des bases appropriées sont, par exemple, la N-méthylmorpholine, la triéthylamine, la tributylamine, la diisopropyléthylamine, la dicyclohexylamine, la N-méthylpipéridine, la pyridine, la 4-(1-pyrrolidinyl)pyridine, la picoline, la 4-(N,N-diméthylamino)pyridine, la 2,6-di-t-butyl-4-méthylpyridine, la quinoléine, la N,N-diméthylaniline, la N,N-diéthylaniline, le 1,8-diazabicyclo[5.4.0]-undec-7-ène (DBU), le 1,5-diazabicyclo[4.3.0]non-5-ène (DBN) et le 1,4-diazabicyclo [2.2.2]-octane (DABCO ou triéthylènediamine).

La réaction est préférablement mise en oeuvre dans un solvant aprotique polaire tel qu'un éther et, par exemple, l'éther de diéthyle, l'éther de diisopropyle, le tétrahydrofuranne, le dioxanne, le diméthoxyéthane ou l'éther diméthylique de diéthylèneglycol. L'éther de diéthyle est préféré.

La température réactionnelle est fonction de la réactivité des molécules en présence et de la force de la base utilisée. Cette température varie généralement entre -78°C et la température ambiante (15-25°C). De façon avantageuse, une température comprise entre -78°C et -50°C convient. Puis, il est souhaitable de laisser le milieu revenir à température ambiante.

Lorsque l'amine (IX) est une amine secondaire ($R^1$ distinct de H), la réaction est stoechiométrique ; dans ce cas, le rapport molaire de l'amine (IX) à l'halogénure de disulfure (VIII) est choisi compris entre 1 et 2, mieux encore entre 1 et 1,5.

Lorsque l'amine (IX) est primaire ($R^1$ représente H), alors la quantité mise en jeu dépend de la nature du produit réactionnel visé. En vue d'obtenir un composé organosilicié de formule générale (IV) dans lequel $R^1$ représente H, l'amine (IX) sera en excès dans le milieu réactionnel. Le rapport molaire (IX)/(VIII) varie généralement entre 1 et 3, ce rapport étant généralement le plus proche de 1, par exemple choisi entre 1 et 1,2.

En vue d'obtenir un composé organosilicié de formule particulière (VII), le rapport molaire du produit (VIII) à l'amine (IX) sera choisi supérieur ou égal à 2. Ce rapport molaire (VIII)/(IX) sera avantageusement compris entre 2 et 2,3. La quantité de base à utiliser pour cette réaction sera facilement déterminée par l'homme du métier, la base ayant pour rôle de piéger l'acide halohydrique libéré. Le rapport molaire de la base au composé de formule (VIII) est supérieur ou égal à 1, par exemple compris entre 1 et 3.

B) Méthode "B"

Les composés organosiliciés polysilylés de formule générale (IV) (formules particulières (V) à (VII) incluses) dans laquelle x = 2 peuvent être également obtenus par réaction d'un disulfure de formule:

(X) $(R^6O)_bR^5_{(3-b)}Si\text{-}A\text{-}S\text{-}S\text{-}J$

dans laquelle A, $R^5$, $R^6$ et b sont tels que définis supra et J représente le groupe succinimido ou phtalimido éventuellement substitué; sur l'amine (IX) définie ci-dessus, en présence d'une base, de préférence une base organique. Les substituants des groupes phtalimido et succinimido sont des substituants organiques compatibles avec la réaction mise en jeu, c'est-à-dire non réactifs dans les conditions opératoires mises en oeuvre. Les bases utilisables sont celles définies ci-dessus pour la méthode A.

De façon avantageuse, la réaction est mise en oeuvre dans un solvant polaire aprotique et, de préférence, un hydrocarbure halogéné aliphatique (tel que le chlorure de méthylène ou le tétrachlorure de carbone) ou un hydrocarbure aromatique éventuellement halogéné (tel qu'un benzène ou un toluène éventuellement halogéné). De préférence, le solvant est $CCl_4$. La température réactionnelle est préférablement comprise entre -10°C et 100°C, plus préférentiellement entre 10°C et 50° C. Les quantités respectives des composés (IX) et (X) mises en présence dépendent du type de composé organosilicié visé, tout comme dans le cas précédent (méthode A).

On se rapportera donc à la méthode A pour la détermination des quantités molaires de (IX), (X) et de base à faire réagir.

C) Méthode "C"

Les composés organosiliciés polysilylés de formule générale (IV) (formules particulières (V) à (VII) incluses) dans laquelle x = 2 peuvent être aussi obtenus par réaction d'un aminosulfure de formule:

(XI) $J\text{-}S\text{-}NR^1R^2$

dans laquelle $R^1$, $R^2$ et J sont tels que définis supra, avec un thiol de formule:

(XII) $(R^6O)_bR^5_{(3-b)}Si\text{-}A\text{-}SH$

dans laquelle A, $R^5$, $R^6$ et b sont tels que définis supra, en présence d'une base, la base étant préférentiellement telle que définie ci-dessus.

Pour cette réaction, la température réactionnelle varie avantageusement entre 10 et 40°C, plus préférablement entre 15 et 30°C, par exemple entre 18 et 25°C.

La réaction du composé (XII) sur le composé (XI) est généralement mise en oeuvre dans un solvant aprotique polaire tel que défini dans le cas de la méthode B. De préférence, le solvant est le benzène ou le toluène. La réaction est une réaction stoechiométrique. On préfère toutefois opérer en présence d'un léger excès du composé (XI). Ainsi, le rapport molaire de (XI) à (XII) sera généralement compris entre 1 et 1,5, mieux encore entre 1 et 1,3.

Cette variante C est notamment mise en oeuvre pour la préparation des composés organosiliciés de formule générale (IV) (formules particulières (V) à (VII) incluses) dans lesquels $R^1$ est distinct d'un atome d'hydrogène.

Les composés de formule (VIII) peuvent être préparés par réaction de dichlorure de soufre ($SCl_2$) sur un mercaptosilane approprié de formule (XII) tel que défini ci-dessus, en présence d'une base organique, et préférablement en présence de triéthylamine. Cette réaction est par exemple mise en oeuvre dans un éther à une température de -78°C à -50°C. Les bases organiques et les éthers sont généralement tels que définis ci-dessus.

Les amines (IX) sont commerciales, ou facilement préparées à partir de produits commerciaux.

Les composés de formule (X) sont facilement préparés par réaction d'un thiol de formule (XII) tel que défini ci-dessus sur l'halogénure de formule:

(XIII) J - S - Hal

où J et Hal sont tels que définis supra.

Cette réaction est préférablement mise en oeuvre en présence d'une base, notamment une base organique, à une température de 10°C à 50°C, par exemple de 15°C à 30°C, notamment entre 18°C et 25°C, dans un solvant aprotique polaire généralement tel que défini à la méthode B. De préférence, le solvant est le tétrachlorure de carbone, la base est la triéthylamine et la température est la température ambiante. Cette réaction est stoechiométrique ; néanmoins, il est souhaitable d'opérer en présence d'un défaut de thiol (XII). Ainsi, le rapport molaire du composé (XIII) au composé (XII) est avantageusement compris entre 1 et 1,5, mieux encore entre 1 et 1,3.

Les composés de formule (XI) sont facilement obtenus par réaction d'une amine (IX) sur l'halogénure de formule (XIII), en présence d'une base organique. Cette réaction est préférablement mise en oeuvre dans un solvant de type hydrocarbure halogéné (et notamment le tétrachlorure de carbone) à une température généralement comprise entre 10°C et 50°C, de préférence entre 15°C et 30°C, par exemple entre 18°C et 25°C (température ambiante). A titre de base organique, on optera pour l'une quelconque des bases définies ci-dessus et, par exemple, pour la triéthylamine. En variante, il est possible d'utiliser le réactif (IX) comme base. Dans ce cas de figure, on utilisera au moins deux équivalents d'amine (IX) pour 1 équivalent de l'halogénure (XIII).

Les composés de formule (XII) sont commerciaux ou facilement préparés à partir de composés commerciaux.

Le schéma 1 ci-dessous illustre une voie de synthèse du composé (XIII) :

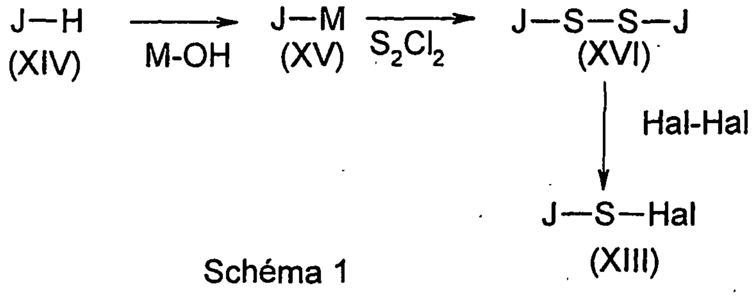

(XIV) (XV) (XVI) (XIII)

Schéma 1

Dans ce schéma, J et Hal sont tels que définis ci-dessus et M représente un métal alcalin, de préférence Na ou K.

Le composé (XIV) commercial est transformé en sel de métal alcalin par action d'une base inorganique appropriée, M-OH où M est un métal alcalin, de type hydroxyde de métal alcalin dans un alcool inférieur en $C_1$-$C_4$ tel que le méthanol ou l'éthanol. Cette réaction a généralement lieu à une température de 15°C à 25°C. Le sel résultant de formule (XV) est mis à réagir avec $S_2Cl_2$ pour conduire au composé (XVI). Les conditions réactionnelles avantageuses pour cette réaction sont un solvant aprotique polaire du type d'un hydrocarbure aliphatique halogéné ($CH_2Cl_2$, $CCl_4$) et une température comprise entre -20°C et 10°C. Puis, l'action de Hal-Hal sur le composé (XVI) conduit au composé (XIII) attendu. Dans cette dernière étape, on opère préférablement dans un solvant aprotique polaire dé type hydrocarbure aliphatique halogéné (tel que le chloroforme ou le dichlorométhane) à une température comprise entre 15°C et la température de reflux du solvant, de préférence entre 40°C et 80°C, par exemple entre 50°C et 70°C. Selon un mode de réalisation préféré, Hal représente le chlore, auquel cas Hal-Hal est introduit sous forme gazeuse dans le milieu réactionnel.

D) Méthode "D"

Les composés organosiliciés polysilylés de formule générale (IV) (formules particulières (V) à (VII) incluses) dans laquelle x = 3 peuvent être obtenus en enchaînant les étapes suivantes :

(1) réaction du thiol de formule (XII) avec $S_2(Hal)_2$ où Hal représente un atome d'halogène, et, de préférence de chlore, en présence d'une base, de référence une base organique, pour donner :

(XVII) $(R^6O)_bR^5_{(3-b)}$Si-A-S-S-S-Hal

Cette réaction est par exemple mise en oeuvre dans un éther à une température de -78 à -50°C. Les bases organiques et les éthers sont généralement tels que définis ci-dessus dans la méthode A ; et

(2) réaction du composé (XVII) sur l'amine appropriée de formule (IX) en présence d'une base, de préférence une base organique ; pour plus de détails, on pourra se reporter au mode opératoire décrit supra à propos de la conduite de la méthode A.

E) Méthode "E"

Les composés organosiliciés polysilylés de formule générale (IV) (formules particulières (V) à (VII) incluses) dans laquelle x = 4 peuvent être obtenus en enchaînant les étapes suivantes :

(1) réaction de l'halogénure de disulfure de formule (VIII) ou de l'halogénure de trisulfure de formule (XVII) avec la quantité requise de soufre élémentaire [apport de 2 atomes de soufre dans le cas du composé (VIII) ou apport de 1 atome de soufre dans le cas du composé (XVII)], en opérant à une température allant de 70°C à 170°C, en présence éventuellement d'un solvant aromatique, pour donner le composé de formule :

(XVIII) $(R^6O)_bR^5_{(3-b)}$Si-A-S-S-S-S-Hal

(2) réaction du composé de formule (XVIII) sur l'amine appropriée de formule (IX) en présence d'une base, de préférence une base organique ; pour plus de détails, on pourra se reporter au mode opératoire décrit supra à propos de la conduite de la méthode A.

II-5. Additifs divers

Bien entendu, les compositions de caoutchouc des pneumatiques conformes à l'invention comportent également tout ou partie des additifs habituellement utilisés dans les compositions de caoutchouc diénique destinées à la fabrication de pneumatiques, comme par exemple des plastifiants, des huiles d'extension, des agents de protection tels que cires anti-ozone, anti-ozonants chimiques, anti-oxydants, agents anti-fatigue, des promoteurs d'adhésion, des activateurs de couplage tels que décrits par exemple dans les demandes WO00/05300 et WO00/05301 précitées, des résines renforçantes telles que décrites dans WO02/10269, un système de réticulation à base soit de soufre, soit de donneurs de soufre et/ou de peroxyde et/ou de bismaléimides, des accélérateurs de vulcanisation, des activateurs de vulcanisation, etc. A la charge inorganique renforçante peut être également associée, si besoin est, une charge blanche conventionnelle peu ou non renforçante, par exemple des particules d'argiles, de bentonite, talc, craie, kaolin.

Les compositions de caoutchouc peuvent également contenir, en complément des composés organosiliciés précédemment décrits, des agents de recouvrement de la charge inorganique renforçante, comportant par exemple la seule fonction Y, ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes, notamment des alkyltriéthoxysilanes comme par exemple le 1-octyl-triéthoxysilane commercialisé par la société Degussa-Hüls sous la dénomination Dynasylan Octeo ou le 1-hexa-décyltriéthoxysilane commercialisé par la société Degussa-Hüls sous la dénomination Si216, des polyols; des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

II-6. Préparation des compositions de caoutchouc

Les compositions sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée $T_{max}$) comprise entre 110°C et 190°C, de préférence entre 130°C et 180°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation ; de telles phases ont été décrites par exemple dans les demandes EP 501 227, EP 735 088, EP 810 258, EP 881 252, WO00/05300, WO00/05301, WO02/10269 précitées.

Le procédé de fabrication selon l'invention est **caractérisé en ce qu**'au moins la charge inorganique renforçante et le composé organosilicié sont incorporés par malaxage à l'élastomère diénique, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et composé organosilicié), puis dans un deuxième temps, par exemple après une à deux minutes de malaxage, les éventuels agents de recouvrement ou de mise en oeuvre complémentaires et autres additifs divers, à l'exception du système de vulcanisation ; lorsque la densité apparente de la charge inorganique renforçante est faible (cas général des silices), il peut être avantageux de fractionner son introduction en deux ou plusieurs parties. Une seconde étape de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermo-mécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors le système de vulcanisation à basse température, généralement dans un mélangeur externe tel qu'un mélangeur à cylindres ; le tout est alors mélangé (phase productive) pendant quelques minutes, par exemple entre 5 et 15 minutes.

La composition finale ainsi obtenue est ensuite calandrée, par exemple sous la forme d'une feuille, d'une plaque ou encore extrudée, par exemple pour former un profilé de caoutchouc utilisé pour la fabrication de semi-finis tels que des bandes de roulement, des nappes d'armatures de sommet, des flancs, des nappes d'armatures de carcasse, des talons, des protecteurs, des chambres à air ou des gommes intérieures étanches pour pneu sans chambre.

La vulcanisation (ou cuisson) est conduite de manière connue à une température généralement comprise entre

130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le système de vulcanisation proprement dit est préférentiellement à base de soufre et d'un accélérateur primaire de vulcanisation, en particulier un accélérateur du type sulfénamide. A ce système de réticulation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine), etc. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique. L'accélérateur primaire de vulcanisation est utilisé à un taux préférentiel compris entre 0,5 et 10 pce, plus préférentiellement compris entre 0,5 et 5,0 pce en particulier lorsque l'invention s'applique à une bande de roulement de pneumatique.

L'invention concerne les pneumatiques précédemment décrits tant à l'état dit "cru" (i.e., avant cuisson) qu'à l'état dit "cuit" ou vulcanisé (i.e., après réticulation ou vulcanisation). Les compositions peuvent être utilisées seules ou en coupage (i.e., en mélange) avec toute autre composition de caoutchouc utilisable pour la fabrication de pneumatiques.

## III. EXEMPLES DE REALISATION DE L'INVENTION

### III-1. Synthèse des agents de couplage

Les agents de couplage utilisables préférentiellement dans les pneumatiques de l'invention sont des silanes-dithiosulfénamide, plus préférentiellement des alkoxysilanes répondant à l'une des formules (V-1) à (V-3) et (VII-1) à (VII-3) dont des modes de synthèse sont décrits ci-après, à titre d'exemples non limitatifs.

Les points de fusion (Pf) exprimés en degré Celsius (°C) sont déterminés par projection sur un banc KOFFLER, préalablement étalonné ($\Delta T = \pm 2°C$). Les points d'ébullition ($Eb_{pression}$) sont donnés en millibars (mbar). Les spectres 250 MHz du proton (RMN$^1$H) et du carbone (RMN$^{13}$C) sont enregistrés sur un spectromètre BRUCKER AC 250. Les déplacements chimiques ($\delta$c et $\delta$h) sont exprimés en partie par million (ppm) par rapport au deutériochloroforme ($CDCl_3$). Les constantes de couplage notées J sont exprimées en Hz. Les abréviations suivantes sont utilisées : s, *singulet* ; sl, *singulet large* ; d, *doublet* ; t, *triplet* ; q, *quadruplet* ; m, *multiplet.*

Toutes les manipulations avec les alkoxysilanes sont faites sous atmosphère inerte et dans des conditions anhydres.

### Exemple 1

Dans ce premier essai, est synthétisé la N-(3'-triméthoxysilylpropyldithio)-3-triéthoxysilylpropylamine.

Dans un tricol de deux litres sous atmosphère d'argon, une solution de 100 mmol (soit 10,3 g) de dichlorure de soufre dans 400 mL d'éther diéthylique anhydre est refroidie à -78°C. Sous agitation mécanique, un mélange de 3-mercaptopropyltriméthoxysilane (100 mmol) et de triéthylamine (100 mmol soit 10,2 g) dans 150 mL d'éther diéthylique anhydre est ajouté goutte à goutte en une heure. Le milieu réactionnel est agité à cette température pendant une heure puis un mélange de 3-(triéthoxysilyl)-propylamine (110 mmol) et de triéthylamine (100 mmol soit 10,2 g) dans 100 mL d'éther diéthylique anhydre est additionné goutte à goutte en une heure. On laisse revenir le milieu réactionnel à température ambiante puis on filtre le chlorhydrate de triéthylamine et on concentre sous pression réduite. Une distillation sous pression réduite permet d'éliminer les traces de réactifs n'ayant pas réagi.

L'analyse RMN confirme que le composé final ainsi obtenu (aspect huile jaune, rendement 75%) répond à la formule particulière précitée (V-1):

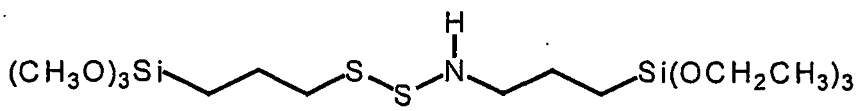

- RMN $^1$H ($CDCl_3$) $\delta_H$
  0,62 (t, 2H, Si-C**H$_2$**) ; 0,74 (t, 2H, Si-C**H$_2$**) ; 1,21 (t, 9H, C**H$_3$**-CH$_2$-O); 1,69 (m, 2H, C**H$_2$**) ; 1,82(m, 2H, C**H$_2$**) ; 2,88 (t, 2H, SC**H$_2$**) ; 3,07 (t, 2H, NC**H$_2$**) ; 3,55 (s, 9H, O-C**H$_3$**) ; 3,81 (q, 6H, -OC**H$_2$**).
- RMN $^{13}$C ($CDCl_3$) $\delta_C$
  6,2 (Si-$CH_2$) ; 9,7 (Si-$CH_2$) ; 18,4 ($CH_3$-$CH_2$) ; 20,9 ($CH_2$) ; 23,8 ($CH_2$) ; 44,0 (S-$CH_2$) ; 50,6 (-$OCH_3$) ; 54,9 (N-$CH_2$) ; 58,5 (-$OCH_2$).

On a ainsi préparé un organoxysilane-dithiosulfénamide de formule générale (V) dans laquelle:

- $R^1 = H$ ;
- $R^2 = -Z- Si (OR^4)_3$ ;
- $Z = (CH_2)_3$ (propylène);
- $R^4$ = éthyle ; $R^6$ = méthyle ;
- a=b=3.

Exemple 2

Par mise en oeuvre du même protocole opératoire, mais en remplaçant le 3-mercaptopropyltriméthoxysilane par le 3-mercaptopropyltriéthoxysilane, on obtient comme attesté par l'analyse RMN la N-(3'-triéthoxysilylpropyldithio)-3-triéthoxysilylpropylamine (aspect huile jaune, rendement 86%) de formule particulière précitée (V-2):

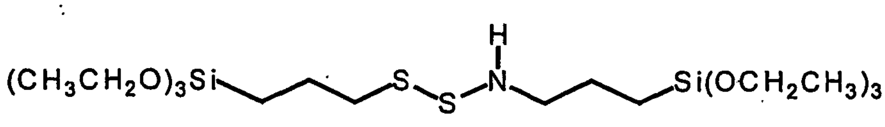

- RMN $^1H$ ($CDCl_3$) $\delta_H$
  0,61 (t, 2H, Si-$CH_2$) ; 0,72 (t, 2H, Si-C**H**$_2$) ; 1,21 (m, 18H, C**H**$_3$-$CH_2$-O) ; 1,69 (2, 2H, C**H**$_2$) ; 1,83(m, 2H, C**H**$_2$) ; 2,89 (t, 2H, S-C**H**$_2$) ; 3,05 (t, 2H, N-$CH_2$) ; 3,81 (m, 12H, -$OCH_2$).
- RMN $^{13}C$ ($CDCl_3$) $\delta_C$
  6,2 (Si-$CH_2$) ; 9,7 (Si-$CH_2$) ; 18,3 ($CH_3$-$CH_2$) ; 18,4 ($CH_3$-$CH_2$) ; 20,9 ($CH_2$) ; 23,8 ($CH_2$) ; 44,0 (S-$CH_2$) ; 54,9 (N-$CH_2$) ; 58,5 (-$OCH_2$) ; 58,6 (-$OCH_2$).

Exemple 3

Par mise en oeuvre du protocole opératoire de l'exemple 1, mais en remplaçant la 3-(triéthoxysilyl)-propylamine par la cyclohexylamine et en utilisant 55 mmole de cyclohexylamine, on obtient, comme attesté par l'analyse RMN, la N,N-bis(3-triméthoxysilylpropyldithio)cyclohexylamine (aspect huile orange, rendement 85%), de formule particulière précitée (VII-1):

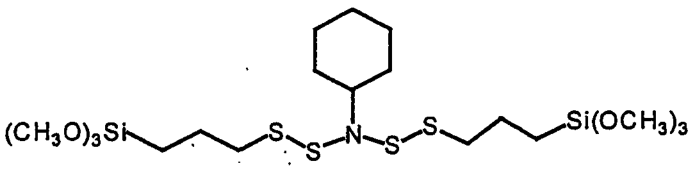

- RMN $^1H$ ($CDCl_3$) $\delta_H$
  0,73 (m, 4H, Si-C**H**$_2$) ; 1,22 (m, 2H, C**H**$_2$) ; 1,64-1,92 (m, 8H, C**H**$_2$) ; 2,25 (m, 2H, C**H**$_2$) ; 2,40 (m, 2H, $CH_2$) ; 2,88 (m, 4H, SC**H**$_2$) ; 3,01 (m, 1H, NC**H**) ; 3,56 (s, 18H, -OC**H**$_3$).
- RMN $^{13}C$ ($CDCl_3$) $\delta_C$
  8,3 (2xSi-$CH_2$) ; 22,3 (2x$CH_2$) ; 26,5 ($CH_2$) ; 25,9 (2 x $CH_2$) ; 32,7 (2 x $CH_2$) ; 41,6 (2xS-$CH_2$) ; 50,4 (-$OCH_3$) ; 59,9 (N-CH).

On a ainsi préparé un un organoxysilane-dithiosulfénamide de formule (VII) dans laquelle:

- $R^1$ = cyclohexyle .
- $Z = (CH_2)_3$ (propylène);
- $R^4$ = méthyle;
- a = 3 .

Exemple 4

Par mise en oeuvre du même protocole opératoire que l'exemple 3, mais en remplaçant le 3-mercaptopropyltriméthoxysilane par le 3-mercaptopropyltriéthoxysilane, on obtient, comme attesté par l'analyse RMN, la N,N-bis(3-triéthoxy-silylpropyldithio)cyclohexylamine (aspect huile orange, rendement 90%), répondant à la formule particulière précitée (VII-2):

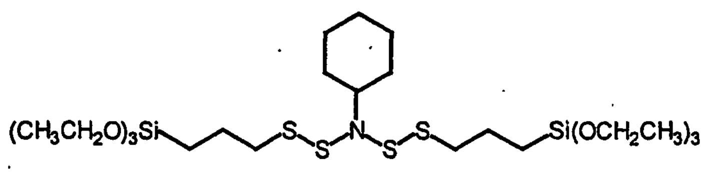

- RMN $^{1}H$ ($CDCl_3$) $\delta_H$
  0,75 (t, 4H, Si-C**H**$_2$) ; 1,21 (m, 20H, 6x$CH_3$ et C**H**$_2$) ; 1,62-1,91 (m, 8H, C**H**$_2$) ; 2,25 (m, 2H, C**H**$_2$) ; 2,40 (m, 2H, C**H**$_2$) ; 2,89 (t, 4H, $SCH_2$) ; 3,01 (m, 1H, NC**H**) ; 3,81 (q, 12H, -$OCH_2$).
- RMN $^{13}C$ ($CDCl_3$) $\delta_C$
  9,6 (2xSi-$CH_2$) ; 18,1 (2x$CH_3$) ; 22,3 (2x$CH_2$) ; 26,5 ($CH_2$) ; 26,0 (2 x $CH_2$) ; 32,7 (2 x $CH_2$) ; 41,5 (S-$CH_2$) ; 58,3 (-CH2) ; 59,8 (N-CH).

Exemple 5

Par mise en oeuvre du même protocole opératoire que l'exemple 3, mais en remplaçant la cyclohexylamine par la 3-(triéthoxysilyl)propylamine, on obtient, comme attesté par l'analyse RMN, la N,N-bis(3-(triéthoxysilylpropyldithio)-3-triéthoxysilylpropylamine (aspect huile jaune, rendement 87%), de formule particulière (VII-3):

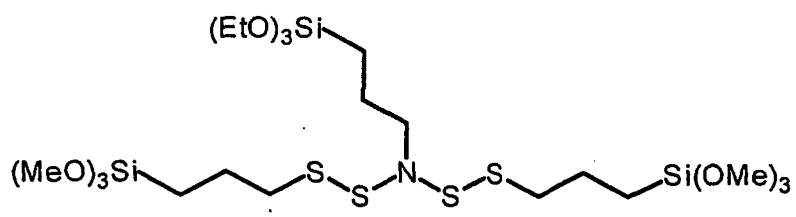

- RMN $^{1}H$ ($CDCl_3$) $\delta_H$
  0,62 (t, 2H, Si-C**H**$_2$) ; 0,74 (t, 4H, Si-C**H**$_2$) ; 1,22 (t, 9H, C**H**$_3$-$CH_2$-O); 1,67 (m, 2H, C**H**$_2$) ; 1,83(m, 4H, C**H**$_2$) ; 2,82 (t, 4H, S-C**H**$_2$) ; 3,05 (m, 2H, C**H**$_2$) ; 3,55 (s, 18H, O-C**H**$_3$) ; 3,80 (q, 6H, -$OCH_2$).
- RMN $^{13}C$ ($CDCl_3$) $\delta_C$
  6,2 (Si-$CH_2$) ; 9,7 (Si-$CH_2$) ; 18,4 ($CH_3$-$CH_2$) ; 20,9 ($CH_2$) ; 23,8 ($CH_2$) ; 44,0 (S-$CH_2$) ; 50,6 (-$OCH_3$) ; 54,9 (N-$CH_2$) ; 58,5 (-$OCH_2$).

Exemple 6

Dans cet essai est synthétisée en trois étapes la N-méthyl-N-(3'-triéthoxysilylpropyldithio)-3'-triméthoxysilylpropylamine de formule (V-3).

a) chlorure de phtalimidosulfényle:

Dans un tricol muni d'une agitation magnétique, on chauffe à 60°C une suspension de 0,1 mole (35,6 g) de disulfure de phtalimide dans 350 mL de chloroforme. On fait passer un courant de chlore gazeux jusqu'à solubilisation complète. On laisse revenir le milieu réactionnel à température ambiante puis on évapore le solvant sous pression réduite. On recristallise le chlorure de phtalimidosulfényle dans du dichlorométhane.

Rendement : 99%
Aspect cristaux jaunes

Point de fusion : 114°C
RMN $^1H$ ($CDCl_3$) $\delta_H$ :

7,90 (m, 2H aromatiques) ; 8,01 (m, 2H aromatiques).
RMN $^{13}C$ ($CDCl_3$) $\delta_C$
124,7 (2 CH aromatiques) ; 131,6 (2 C aromatiques) ;
135,6 (2 CH aromatiques) ; 165,8 (2 C=O).

b) N-(N'-méthyl-N'-3-triméthoxysilylpropyl)aminothiophtalimide:

Dans un tricol muni d'une agitation magnétique et sous atmosphère inerte, on dissout le chlorure de phtalimidosulfényle précédent (0,1 mol soit 21,35 g) dans 350 mL de chloroforme. 0,21 mole de N-méthyl-N-(3-triméthoxysilylpropyl)amine diluée dans 50 mL de chloroforme est additionnée goutte à goutte à température ambiante. On laisse agiter 3 heures puis on évapore le solvant. On reprend avec de l'éther diéthylique, filtre le chlorhydrate de l'amine puis concentre sous pression réduite.

Rendement : 88%
Aspect : huile orange
RMN $^1H$ ($CDCl_3$) $\delta_H$
0,64 (t, 2H, Si-C**H**$_2$) ; 1,78 (m, 2H, C**H**$_2$) ; 2,93 (**H**$_3$C-N) ;
3,05 (t, 2H N- C**H**$_2$) ; 3,56 (s, 9H -OC**H**$_3$) ; 7,77 (m, 2H aromatiques) ;
7,92 (m, 2H aromatiques).
RMN $^{13}C$ ($CDCl_3$) $\delta_C$
5,9 ($SiCH_2$) ; 21,0 ($CH_2$) ; 46,8 ($N-CH_3$) ; 50,5 ($-OCH_3$) ;
62,9 ($N-CH_2$); 123,8 (2 CH aromatiques) ; 132,3 (2 C aromatiques) ;
134,2 (2 CH aromatiques) ; 169,5 (C=O).

c) N-méthyl-N-(3'-triéthoxysilylpropyldithio)-3'-triméthoxysilylpropylamine:

Dans un tricol muni d'une agitation magnétique et sous atmosphère inerte, on dissout le sulfure obtenu à l'étape précédente (50 mmol) dans 250 mL de benzène. On additionne en une fois le 3-mercaptopropyltriéthoxysilane (45 mmol) dilué dans un minimum de benzène. On laisse sous agitation à température ambiante pendant 48 heures. On filtre le phtalimide qui a précipité et le sulfure en excès puis on évapore le solvant sous pression réduite.

On obtient ainsi, comme attesté par l'analyse RMN, la N-méthyl-N-(3'-triéthoxysilylpropyldithio)-3'-triméthoxysilylpropylamine (aspect huile jaune, rendement 95%), de formule particulière précitée (V-3):

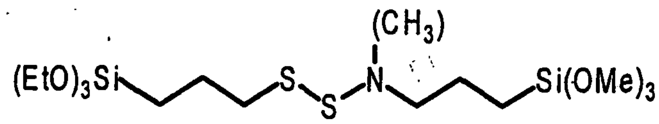

- RMN $^1H$ ($CDCl_3$) $\delta_H$
  0,61 (t, 2H, Si-C**H**$_2$) ; 0,72 (t, 2H, Si-C**H**$_2$) ; 1,22(t, 9H, C**H**$_3$) ; 1,68 (m, 2H, C**H**$_2$) ; 1,80 (m, 2H, C**H**$_2$) ; 2,68 ($NCH_3$) ; 2,75 (t, 2H, C**H**$_2$) 2,88 (t, 2H, C**H**$_2$) ; 3,57 (s, 9H, -OC**H**$_3$) ; 3,82 (q, 6H, O-C**H**$_2$).
- RMN $^{13}C$ ($CDCl_3$) $\delta_C$
  6,2 ($Si-CH_2$) ; 9,7 ($Si-CH_2$) ; 18,4 ($CH_3-CH_2$) ; 20,9 ($CH_2$) ; 23,8 ($CH_2$) ; 44,0 ($S-CH_2$); 46,1 ($-NCH_3$) ; 50,6 ($-OCH_3$) ; 58,5 ($-OCH_2$) ; 60,9 ($N-CH_2$).

On obtient ainsi un un organoxysilane-dithiosulfénamide de formule (V) dans laquelle:

- $R^1$ = méthyle ;
- $R^2$ = -Z- Si $(OMe)_3$ ;
- Z = $(CH_2)_3$ (propylène) ;
- $R^4$ = méthyle ; $R^6$ = éthyle ;

- a=b=3.

III-2. Préparation des compositions de caoutchouc

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis, après une à deux minutes de malaxage, les divers autres ingrédients à l'exception du système de vulcanisation. On conduit alors un travail thermomécanique (phase non-productive) en deux étapes (durée totale du malaxage égale à environ 7 min), jusqu'à atteindre une température maximale de "tombée" d'environ 165°C. On récupère le mélange ainsi obtenu, on le refroidit puis on ajoute le système de vulcanisation (soufre et accélérateur sulfénaminde) sur un mélangeur externe (homo-finisseur) à 30°C, en mélangeant le tout (phase productive) pendant 3 à 10 minutes.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

Dans les essais qui suivent, la charge inorganique renforçante (silice HDS) constitue la totalité de la charge renforçante, utilisée à un taux préférentiel compris dans un domaine de 50 à 100 pce ; mais il va de soi pour l'homme du métier qu'une fraction de cette dernière, de préférence minoritaire, pourrait être remplacée par du noir de carbone.

III-3. Caractérisation des compositions de caoutchouc

Cet essai a pour but de démontrer les performances de couplage (charge inorganique/élastomère diénique) améliorées dans une composition d'un pneumatique conforme à l'invention, comparée à une composition de l'art antérieur utilisant un agent de couplage conventionnel TESPT.

- composition C-1: silane TESPT conventionnel;
- composition C-2: silane-dithiosulfénamide de formule VII-2.

On rappelle que le TESPT est le tétrasulfure de bis(3-triéthoxysilylpropyl), de formule $[(C_2H_5O)_3Si(CH_2)_3S_2]_2$ ; il est commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas, mélange commercial de polysulfures $S_x$ avec une valeur moyenne pour x qui est proche de 4).

La formule développée du TESPT est:

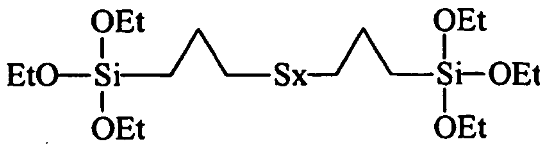

Cette formule est à comparer à celle du silane-dithiosulfénamide de formule VII-1 :

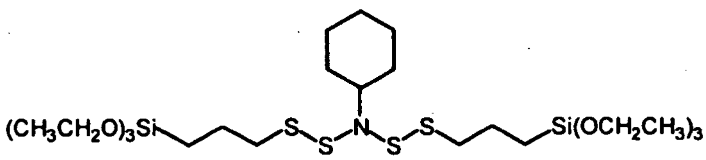

On note qu'une partie des deux structures chimiques ci-dessus est identique (fonction Y et groupe hydrocarboné Z - ici chaîne propylène - permettant de relier Y et X), la seule différence résidant dans la nature de la fonction soufrée (fonction X) greffable sur l'élastomère diénique: groupe polysulfure Sx pour la composition conventionnelle, groupe polythiosulfénamide pour la composition du pneumatique de l'invention.

Le tableau 1 annexé donne la formulation des deux compositions (taux des différents produits exprimés en pce) ; le système de vulcanisation est constitué par soufre et sulfénamide.

Les deux agents de couplage sont utilisés ici à un taux isomolaire en silicium, c'est-à-dire qu'on utilise, quelle que soit la composition, le même nombre de moles de fonctions Y (ici Y = $Si(OEt)_3$) réactives vis-à-vis de la silice et de ses groupes hydroxyles de surface.

Par rapport au poids de charge inorganique renforçante, le taux d'agent de couplage est dans les deux cas inférieur à 10 pce, ce qui représente moins de 15% en poids par rapport à la quantité de charge inorganique renforçante.

Les figures 1 et 2 annexées reproduisent respectivement les rhéogrammes (couple en dN.m en fonction de la durée de vulcanisation en min) et, après cuisson (40 min à 150°C), les courbes de module (en MPa) en fonction de l'allongement (en %) ; ces courbes sont notées C1 et C2 sur la figure 1, puis C1' et C2' sur la figure 2, et elles correspondent respectivement aux compositions C-1 et C-2.

Tout d'abord, les rhéogrammes de la figure 1 montrent bien la supériorité de la composition C-2 : délai d'induction (5,1 min après mesure selon paragraphe I-3) voisin de celui de la composition témoin (7,5 min) ; couple maximal (19 dN.m après mesure) supérieur à celui de la composition témoin (18 dN.m), enfin et surtout cinétique de vulcanisation nettement plus rapide comme cela est illustré par une pente du rhéogramme (constante K) nettement plus marquée entre 30% et 80% de conversion : la mesure (selon paragraphe I-3) donne K = 0,22 $min^{-1}$ pour la composition C-2, pratiquement le double de la pente enregistrée pour la composition témoin (K = 0,13 $min^{-1}$) ; en d'autres termes la cuisson de la composition peut être réalisée en un temps plus court.

Après cuisson (figure 2), la composition du pneumatique de l'invention (courbe C2), comparée à la composition témoin (courbe C1), révèle des propriétés à la rupture sensiblement équivalentes, mais un niveau de renforcement (module) nettement supérieur, en particulier à grande déformation (allongements de 100% et plus), l'écart entre les deux courbes étant d'autant plus prononcé que l'allongement augmente. Un tel comportement illustre de manière claire un couplage amélioré entre la charge inorganique renforçante et l'élastomère diénique, ce qui laisse présager une très bonne aptitude de la composition de l'invention à résister à l'usure.

On constate en outre que la plasticité Mooney, déjà basse sur la composition témoin, est de manière inattendue diminuée (près de 10%) sur la composition C-2, autre avantage indicateur d'une excellente aptitude des compositions des pneumatiques de l'invention à la mise en oeuvre à l'état cru.

En conclusion, l'agent de couplage sélectionné pour les compositions des pneumatiques conformes à l'invention confère à ces dernières des propriétés de renforcement élevées, d'excellentes propriétés de mise en oeuvre à l'état cru et une très bonne aptitude à la vulcanisation, révélant une efficacité globale supérieure à celle du TESPT, pourtant considéré aujoud'hui comme l'agent de couplage (charge inorganique/élastomère) de référence dans les compositions de caoutchouc diénique renforcées d'une charge inorganique telle qu'une silice renforçante.

L'invention trouve des applications particulièrement avantageuses dans les compositions de caoutchouc destinées à la fabrication de bandes de roulement de pneumatiques présentant à la fois une faible résistance au roulement et une résistance élevée à l'usure, en particulier lorsque ces bandes de roulement sont destinées à des pneumatiques pour véhicules tourisme, motos ou véhicules industriels du type Poids-lourd.

**Tableau 1**

| Composition N°: | C-1 | C-2 |
|---|---|---|
| SBR (1) | 75 | 75 |
| BR (2) | 25 | 25 |
| silice (3) | 80 | 80 |
| alkoxysilane (4) | 6.4 | - |
| alkoxysilane (5) | - | 7.6 |
| DPG (6) | 1.5 | 1.5 |
| ZnO | 2.5 | 2.5 |
| acide stéarique | 2 | 2 |
| soufre | 1.1 | 1.1 |

(suite)

| Composition N°: | C-1 | C-2 |
|---|---|---|
| accélérateur (7) | 2 | 2 |

(1) SSBR avec 59,5% de motifs polybutadiène 1-2 ; 26,5% de styrène ; Tg=-29°C ; 75 pce SBR sec étendu avec une huile aromatique (total SSBR + huile égal à 103 pce);
(2) BR avec 4,3 % de 1-2 ; 2,7% de trans ; 93% de cis 1-4 (Tg = -106°C);
(3) silice type "HDS" - "Zeosil" 1165MP de la société Rhodia sous forme de microperles (BET et CTAB : environ 150-160 $m^2/g$);
(4) TESPT ("Si69" de la société Degussa);
(5) silane-dithiosulfénamide de formule VII-2 (synthétisé selon paragraphe III-1, ex. 4);
(6) diphénylguanidine ("Vulcacit D" de la société Bayer);
(7) N-cyclohexyl-2-benzothiazyl-sulfénamide (société Flexsys: "Santocure" CBS).

**Revendications**

1. Pneumatique comportant une composition élastomérique à base d'au moins (i) un élastomère diénique, (ii) une charge inorganique à titre de charge renforçante et (iii), à titre d'agent de couplage (charge inorganique/élastomère diénique), un composé organosilicié polysilylé au moins bifonctionnel greffable sur l'élastomère au moyen d'un groupe soufré à fonction polythiosulfénamide, de formule:

$$(I) \qquad \equiv Si\text{-}A\text{-}S_x\text{-}NR^1R^2,$$

dans laquelle:

- A est un alkylène en $C_1$-$C_8$ permettant de relier le groupe polythiosulfénamide à un premier atome de silicium du composé organosilicié;
- x est un nombre entier ou fractionnaire de 2 à 4;
- $R^1$ représente l'hydrogène, un groupe hydrocarboné monovalent ou $R^2$;
- $R^2$ représente le groupement:

$$\text{-}B\text{-}Si\equiv,$$

dans lequel:

- Si représente un deuxième atome de silicium du composé organosilicié ;
- B représente les groupes divalents - Z - ou - Sy - Z - dans lesquels Z est un alkylène en $C_1$-$C_8$ et y, identique à ou différent de x, est un nombre entier ou fractionnaire de 2 à 4.

2. Pneumatique selon la revendication 1, $R^1$ étant choisi dans le groupe constitué par l'hydrogène, les alkyles en $C_1$-$C_8$, les cycloalkyles en $C_5$-$C_{10}$, les aryles en $C_6$-$C_{18}$, les ($C_6$-$C_{18}$)aryl-($C_1$-$C_8$)alkyles et $R^2$.

3. Pneumatique selon la revendication 2, $R^1$ étant choisi dans le groupe constitué par hydrogène, méthyle, éthyle, propyle, isopropyle, butyle, hexyle, benzyle, cyclohexyle, phényle et $R^2$.

**4.** Pneumatique selon l'une quelconque des revendications 1 à 3, $R^2$ représentant le groupement:

$$-B-SiR^3_{(3-a)}(OR^4)_a,$$

dans lequel:

- $R^3$ représente un groupe hydrocarboné monovalent;
- $R^4$ représente l'hydrogène ou un groupe hydrocarboné monovalent, identique à ou différent de $R^3$;
- a est un entier égal à 1, 2 ou 3.

**5.** Pneumatique selon la revendication 4, les radicaux $R^3$ et $R^4$ étant choisis parmi les alkyles en $C_1$-$C_8$, les cycloalkyles en $C_5$-$C_{10}$ et phényle.

**6.** Pneumatique selon la revendication 5, les radicaux $R^3$ et $R^4$ étant choisis parmi les alkyles en $C_1$-$C_4$.

**7.** Pneumatique selon l'une quelconque des revendications 1 à 6, l'élastomère diénique étant choisi dans le groupe constitué par les polybutadiènes, les polyisoprènes de synthèse, le caoutchouc naturel, les copolymères de butadiène, les copolymères d'isoprène et les mélanges de ces élastomères.

**8.** Pneumatique selon l'une quelconque des revendications 1 à 7, comportant entre 10 et 200 pce (parties en poids pour cent d'élastomère) de charge inorganique renforçante.

**9.** Pneumatique selon l'une quelconque des revendications 1 à 8, la quantité d'agent de couplage étant comprise entre 1 et 20 pce.

**10.** Pneumatique selon l'une quelconque des revendications 1 à 9, le composé organosilicié étant un silane-polythiosulfénamide de formule:

(IV) $$(R^6O)_bR^5_{(3-b)}Si-A-S_x-NR^1-B-SiR^3_{(3-a)}(OR^4)_a,$$

dans laquelle:

- $R^5$ représente un groupe hydrocarboné monovalent;
- $R^6$ représente l'hydrogène ou un groupe hydrocarboné monovalent, identique à ou différent de $R^5$;
- b est un entier égal à 1, 2 ou 3;
- $R^5$, $R^6$ et b pouvant être, respectivement, identiques à ou différents de $R^3$, $R^4$ et a.

**11.** Pneumatique selon la revendication 10, le silane répondant à la formule particulière:

(V) $$(R^6O)_bR^5_{(3-b)}Si-Z-S_x-NR^1-Z-SiR^3_{(3-a)}(OR^4)_a,$$

dans laquelle les groupements Z, identiques ou différents, représentent un alkylène en $C_1$-$C_4$, les radicaux $R^3$, $R^4$, $R^5$ et $R^6$ représentent un alkyle en $C_1$-$C_3$.

**12.** Pneumatique selon la revendication 10, le silane répondant à la formule particulière:

(VI) $$(R^6O)_bR^5_{(3-b)}Si-Z-S_x-NR^1-S_y-Z-SiR^3_{(3-a)}(OR^4)_a$$

dans laquelle les groupements Z, identiques ou différents, représentent un alkylène en $C_1$-$C_4$, les radicaux $R^3$, $R^4$, $R^5$ et $R^6$ représentent un alkyle en $C_1$-$C_3$, et y , identique à ou différent de x, est un nombre entier ou fractionnaire de 2 à 4.

**13.** Pneumatique selon la revendication 12, le silane ayant pour formule symétrique:

(VII) $$[(R^4O)_aR^3_{(3-a)}Si-Z-S_x-]_2NR^1$$

**14.** Pneumatique selon l'une quelconque des revendications 11 à 13, Z étant le propylène, $R^3$, $R^4$, $R^5$ et $R^6$ étant choisis parmi méthyle et éthyle.

**15.** Pneumatique selon l'une quelconque des revendications 10 à 14, $R^1$ étant choisi dans le groupe constitué par hydrogène, méthyle, éthyle, propyle, isopropyle, hexyle, benzyle, cyclohexyle et phényle.

**16.** Pneumatique selon l'une quelconque des revendications 1 à 15, x et le cas échéant y étant des nombres entiers ou fractionnaires de 2 à 3.

**17.** Pneumatique selon la revendication 16, x et le cas échéant y étant égaux à 2.

**18.** Pneumatique selon l'une quelconque des revendications 1 à 17, la quantité d'agent de couplage représentant entre 0,5% et 20% en poids par rapport à la quantité de charge inorganique renforçante.

**19.** Pneumatique selon l'une quelconque des revendications 1 à 18, la charge inorganique renforçante étant majoritairement de la silice.

**20.** Pneumatique selon la revendication 19, la charge inorganique renforçante formant la totalité de la charge renforçante.

**21.** Pneumatique selon l'une quelconque des revendications 1 à 20, la charge inorganique renforçante étant utilisée en mélange avec du noir de carbone.

**22.** Pneumatique selon la revendication 21, le noir de carbone étant présent à un taux compris entre 2 et 20 pce.

**23.** Pneumatique selon l'une quelconque des revendications 7 à 22, l'élastomère diénique étant un copolymère de butadiène-styrène (SBR) ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

**24.** Pneumatique selon la revendication 23, le SBR étant un SBR préparé en solution (SSBR).

**25.** Pneumatique selon les revendications 23 ou 24, le SBR étant utilisé en mélange avec un polybutadiène.

**26.** Pneumatique selon la revendication 25, le polybutadiène possédant plus de 90% de liaisons cis-1,4.

**27.** Pneumatique selon l'une quelconque des revendications 7 à 22, l'élastomère diénique étant un élastomère isoprénique, de préférence du caoutchouc naturel ou un polyisoprène cis-1,4 de synthèse.

**28.** Pneumatique selon l'une quelconque des revendications 1 à 27, **caractérisé en ce qu'**il se trouve à l'état vulcanisé.

## Claims

**1.** Tyre comprising an elastomeric composition based on at least (i) a diene elastomer, (ii) an inorganic filler as reinforcing filler and (iii), as (inorganic filler/diene elastomer) coupling agent, a polysilylated organosilicon compound which is at least bifunctional and can be grafted on to the elastomer by means of a sulphur group having a polythiosulphenamide function, of formula:

(I) $$\equiv Si\text{-}A\text{-}S_x\text{-}NR^1R^2,$$

in which:

- A is a $C_1$-$C_8$ alkylene ;
- x is an integer or fractional number of from 2 to 4 ;
- $R^1$ represents hydrogen, a monovalent hydrocarbon group or $R^2$;
- $R^2$ represents the grouping:

$$\text{-B-Si}\equiv,$$

in which:

- Si represents a second silicon atom of the organosilicon compound ;
- B represents the divalents groups - Z - or - Sy - Z - in which Z is a $C_1$-$C_8$ alkylene and y, which may be identical to or different from x, is an integer or fractional number of from 2 to 4.

**2.** Tyre according to Claim 1, $R^1$ being selected from the group consisting of hydrogen, $C_1$-$C_8$ alkyls, $C_5$-$C_{10}$ cycloalkyls, $C_6$-$C_{18}$ aryls, ($C_6$-$C_{18}$)aryl-($C_1$-$C_8$)alkyls and $R^2$.

**3.** Tyre according to Claim 2, $R^1$ being selected from the group consisting of hydrogen, methyl, ethyl, propyl, isopropyl, butyl, hexyl, benzyl, cyclohexyl, phenyl and $R^2$.

**4.** Tyre according to any one of Claims 1 to 3, $R^2$ representing the grouping:

$$-B-SiR^3_{(3-a)}(OR^4)_a,$$

in which:

- $R^3$ represents a monovalent hydrocarbon group;
- $R^4$ represents hydrogen or a monovalent hydrocarbon group, which may be identical to or different from $R^3$;
- a is an integer equal to 1, 2 or 3.

**5.** Tyre according to Claim 4, the radicals $R^3$ and $R^4$ being selected from among $C_1$-$C_8$ alkyls, $C_5$-$C_{10}$ cycloalkyls and phenyl.

**6.** Tyre according to Claim 5, the radicals $R^3$ and $R^4$ being selected from among $C_1$-$C_4$ alkyls.

**7.** Tyre according to any one of Claims 1 to 6, the diene elastomer being selected from the group which consists of polybutadienes, synthetic polyisoprenes, natural rubber, butadiene copolymers, isoprene copolymers and mixtures of these elastomers.

**8.** Tyre according to any one of Claims 1 to 7, comprising between 10 and 200 phr (parts by weight per hundred parts of elastomer) of reinforcing inorganic filler.

**9.** Tyre according to any one of Claims 1 to 8, the quantity of coupling agent being between 1 and 20 phr.

**10.** Tyre according to any one of Claims 1 to 9, the organosilicon compound being a silane-polythiosulphenamide of formula:

$$\text{(IV)} \qquad (R^6O)_bR^5_{(3-b)}Si-A-S_x-NR^1-B-SiR^3_{(3-a)}(OR^4)_a,$$

in which:

- $R^5$ represents a monovalent hydrocarbon group;
- $R^6$ represents hydrogen or a monovalent hydrocarbon group, which may be identical to or different from $R^5$;
- b is an integer equal to 1, 2 or 3;
- $R^5$, $R^6$ and b possibly being, respectively, identical to or different from $R^3$, $R^4$ and a.

**11.** Tyre according to Claim 10, the silane being of the specific formula:

$$\text{(V)} \qquad (R^6O)_bR^5_{(3-b)}Si-Z-S_x-NR^1-Z-SiR^3_{(3-a)}(OR^4)_a,$$

in which the groupings Z, which may be identical or different, represent a $C_1$-$C_4$ alkylene, the radicals $R^3$, $R^4$, $R^5$ and $R^6$ representing a $C_1$-$C_3$ alkyl.

**12.** Tyre according to Claim 10, the silane being of the specific formula:

$$\text{(VI)} \qquad (R^6O)_bR^5_{(3-b)}Si-Z-S_x-NR^1-S_y-Z-SiR^3_{(3-a)}(OR^4)_a$$

in which the groupings Z, which may be identical or different, represent a $C_1$-$C_4$ alkylene, the radicals $R^3$, $R^4$, $R^5$

and $R^6$ represent a $C_1$-$C_3$ alkyl, and y, which may be identical to or different from x, is an integer or fractional number of from 2 to 4.

**13.** Tyre according to Claim 12, the silane having the symmetrical formula:

(VII) $[(R^4O)_aR^3_{(3-a)}Si\text{-}Z\text{-}S_x\text{-}]_2NR^1$

**14.** Tyre according to any one of Claims 11 to 13, Z being propylene, $R^3$, $R^4$, $R^5$ and $R^6$ being selected from among methyl and ethyl.

**15.** Tyre according to any one of Claims 10 to 14, $R^1$ being selected from the group consisting of hydrogen, methyl, ethyl, propyl, isopropyl, hexyl, benzyl, cyclohexyl and phenyl.

**16.** Tyre according to any one of Claims 1 to 15, x and if applicable y being integers or fractional numbers of from 2 to 3.

**17.** Tyre according to Claim 16, x and if applicable y being equal to 2.

**18.** Tyre according to any one of Claims 1 to 17, the quantity of coupling agent representing between 0.5% and 20% by weight relative to the quantity of reinforcing inorganic filler.

**19.** Tyre according to any one of Claims 1 to 18, the reinforcing inorganic filler being majoritarily silica.

**20.** Tyre according to Claim 19, the reinforcing inorganic filler forming the entire reinforcing filler.

**21.** Tyre according to any one of Claims 1 to 20, the reinforcing inorganic filler being used in mixture with carbon black.

**22.** Tyre according to Claim 21, the carbon black being present in an amount of between 2 and 20 phr.

**23.** Tyre according to any one of Claims 7 to 22, the diene elastomer being a butadienestyrene copolymer (SBR) having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C.

**24.** Tyre according to Claim 23, the SBR being an SBR prepared in solution (SSBR).

**25.** Tyre according to Claims 23 or 24, the SBR being used in mixture with a polybutadiene.

**26.** Tyre according to Claim 25, the polybutadiene having more than 90% cis-1,4 bonds.

**27.** Tyre according to any one of Claims 7 to 22, the diene elastomer being an isoprene elastomer, preferably natural rubber or a synthetic cis-1,4 polyisoprene.

**28.** Tyre according to any one of Claims 1 to 27, **characterised in that** it is in the vulcanised state.

## Patentansprüche

**1.** Reifen umfassend eine Elastomerzusammensetzung auf der Basis mindestens (i) eines Dienelastomers, (ii) eines anorganischen Füllstoffs als verstärkendem Füllstoff und (iii), als Kupplungsmittel (anorganischer Füllstoff/Dienelastomer), einer mindestens bifunktionnellen polysilylierten siliciumorganischen Verbindung, die auf das Elastomer mittels einer Schwefelgruppe mit Polythiosulfenamidfunktion aufgepfropft werden kann, mit der Formel:

(I) $\equiv Si\text{-}A\text{-}S_x\text{-}NR^1R^2$,

wobei:

- A ein $C_1$-$C_8$-Alkylen ist, das das Verbinden der Polythiosulfenamidgruppe mit einem ersten Siliciumatom der siliciumorganischen Verbindung ermöglicht;

- x eine ganze Zahl oder eine Bruchzahl von 2 bis 4 ist;
- $R^1$ für Wasserstoff, eine einwertige Kohlenwasserstoffgruppe oder $R^2$ steht;
- $R^2$ für die folgende Gruppe steht:

$$- B - Si =,$$

wobei:

- Si für ein zweites Siliciumatom der siliciumorganischen Verbindung steht;
- B für die zweiwertigen Gruppen - Z - oder $-S_y$ - Z - steht, wobei Z ein $C_1$-$C_8$-Alkylen und y, gleich oder verschieden von x, eine ganze Zahl oder eine Bruchzahl von 2 bis 4 ist.

**2.** Reifen nach Anspruch 1, wobei $R^1$ ausgewählt ist aus der Gruppe bestehend aus Wasserstoff, den $C_1$-$C_8$-Alkylen, den $C_5$-$C_{10}$-Cycloalkylen, den $C_6$-$C_{18}$-Arylen, den ($C_6$-$C_{18}$) -Aryl- ($C_1$-$C_8$) -alkylen und $R^2$.

**3.** Reifen nach Anspruch 2, wobei $R^1$ ausgewählt ist aus der Gruppe bestehend aus Wasserstoff, Methyl, Ethyl, Propyl, Isopropyl, Butyl, Hexyl, Benzyl, Cyclohexyl, Phenyl und $R^2$.

**4.** Reifen nach einem der Ansprüche 1 bis 3, wobei $R^2$ für die folgende Gruppe steht:

$$-B-SiR^3_{(3-a)}(OR^4)_a,$$

wobei:

- $R^3$ für eine einwertige Kohlenwasserstoffgruppe steht;
- $R^4$ für Wasserstoff oder eine einwertige Kohlenwasserstoffgruppe, gleich oder verschieden von $R^3$, steht;
- a eine ganze Zahl gleich 1, 2 oder 3 ist.

**5.** Reifen nach Anspruch 4, wobei die Reste $R^3$ und $R^4$ ausgewählt sind aus den $C_1$-$C_8$-Alkylen, den $C_5$-$C_{10}$-Cycloalkylen und Phenyl.

**6.** Reifen nach Anspruch 5, wobei die Reste $R^3$ und $R^4$ ausgewählt sind aus den $C_1$-$C_4$-Alkylen.

**7.** Reifen nach einem der Ansprüche 1 bis 6, wobei das Dienelastomer ausgewählt ist aus der Gruppe bestehend aus Polybutadienen, synthetischen Polyisoprenen, Naturkautschuk, Butadiencopolymeren, Isoprencopolymeren und Gemischen dieser Elastomere.

**8.** Reifen nach einem der Ansprüche 1 bis 7, umfassend zwischen 10 und 200 phr (Gewichtsanteile pro hundert Anteile Elastomer) des verstärkenden anorganischen Füllstoffs.

**9.** Reifen nach einem der Ansprüche 1 bis 8, wobei die Menge des Kupplungsmittels im Bereich zwischen 1 und 20 phr liegt.

**10.** Reifen nach einem der Ansprüche 1 bis 9, wobei die siliciumorganische Verbindung ein Polythiosulfenamidsilan mit folgender Formel ist:

$$\text{(IV)} \qquad (R^6O)_bR^5_{(3-b)}Si-A-S_x-NR^1-B-SiR^3_{(3-a)}(OR^4)_a,$$

wobei:

- $R^5$ für eine einwertige Kohlenwasserstoffgruppe steht;
- $R^6$ für Wasserstoff oder eine einwertige Kohlenwasserstoffgruppe, gleich oder verschieden von $R^5$, steht;
- b eine ganze Zahl gleich 1, 2 oder 3 ist.
- $R^5$, $R^6$ und b jeweils gleich oder verschieden von $R^3$, $R^4$ und a sein können.

**11.** Reifen nach Anspruch 10, wobei das Silan die folgende besondere Formel aufweist:

$$\text{(V)} \qquad (R^6O)_bR^5_{(3-b)}Si-Z-S_x-NR^1-Z-SiR^3_{(3-a)}(OR^4)_a,$$

wobei die Gruppen Z, gleich oder verschieden, für ein $C_1$-$C_4$-Alkylen stehen, die Reste $R^3$, $R^4$, $R^5$ und $R^6$ für ein $C_1$-$C_3$-Alkyl stehen.

**12.** Reifen nach Anspruch 10, wobei das Silan die folgende besondere Formel aufweist:

(VI) $(R^6O)_bR^5_{(3-b)}Si\text{-}Z\text{-}S_x\text{-}NR^1\text{-}S_y\text{-}Z\text{-}SiR^3_{(3-a)}(OR^4)_a$,

wobei die Gruppen Z, gleich oder verschieden, für ein $C_1$-$C_4$-Alkylen stehen, die Reste $R^3$, $R^4$, $R^5$ und $R^6$ für ein $C_1$-$C_3$-Alkyl stehen, und y, gleich oder verschieden von x, eine ganze Zahl oder eine Bruchzahl von 2 bis 4 ist.

**13.** Reifen nach Anspruch 12, wobei das Silan die folgende symmetrische Formel aufweist:

(VII) $[(R^4O)_aR^3_{(3-a)}Si\text{-}Z\text{-}S_x\text{-}]_2NR^1$

**14.** Reifen nach einem der Ansprüche 11 bis 13, wobei Z Propylen ist, $R^3$, $R^4$, $R^5$ und $R^6$ ausgewählt sind aus Methyl und Ethyl.

**15.** Reifen nach einem der Ansprüche 10 bis 14, wobei $R^1$ ausgewählt ist aus der Gruppe bestehend aus Wasserstoff, Methyl, Ethyl, Propyl, Isopropyl, Hexyl, Benzyl, Cyclohexyl und Phenyl.

**16.** Reifen nach einem der Ansprüche 1 bis 15, wobei x und gegebenenfalls y ganze Zahlen oder Bruchzahlen von 2 bis 3 sind.

**17.** Reifen nach Anspruch 16, wobei x und gegebenenfalls y gleich 2 ist.

**18.** Reifen nach einem der Ansprüche 1 bis 17, wobei die Menge des Kupplungsmittels zwischen 0,5 Gew.-% und 20 Gew.-%, bezogen auf die Menge des verstärkenden anorganischen Füllstoffs, darstellt.

**19.** Reifen nach einem der Ansprüche 1 bis 18, wobei der verstärkende anorganische Füllstoff überwiegend Siliciumdioxid ist.

**20.** Reifen nach Anspruch 19, wobei der verstärkende anorganische Füllstoff die Gesamtheit des verstärkenden Füllstoffs bildet.

**21.** Reifen nach einem der Ansprüche 1 bis 20, wobei der verstärkende anorganische Füllstoff als Gemisch mit Ruß verwendet wird.

**22.** Reifen nach Anspruch 21, wobei der Ruß in einem Anteil im Bereich zwischen 2 und 20 phr vorhanden ist.

**23.** Reifen nach einem der Ansprüche 7 bis 22, wobei das Dienelastomer ein Butadienstyrolcopolymer (SBR) ist, das einen Styrolgehalt im Bereich zwischen 20 Gew.-% und 30 Gew.-%, einen Gehalt an Vinylbindungen des Butadienteils im Bereich zwischen 15 Gew.-% und 65 Gew.-%, einen Gehalt an trans-1,4-Bindungen im Bereich zwischen 20 Gew.-% und 75 Gew.-% und eine Glasübergangstemperatur im Bereich zwischen -20 °C und -55 °C aufweist.

**24.** Reifen nach Anspruch 23, wobei das SBR ein in Lösung hergestelltes SBR (SSBR) ist.

**25.** Reifen nach einem der Ansprüche 23 oder 24, wobei das SBR als Gemisch mit einem Polybutadien verwendet wird.

**26.** Reifen nach Anspruch 25, wobei das Polybutadien mehr als 90 % cis-1,4-Bindungen besitzt.

**27.** Reifen nach einem der Ansprüche 7 bis 22, wobei das Dienelastomer ein Isoprenelastomer, bevorzugt Naturkautschuk oder ein synthetisches cis-1,4-Polyisopren ist.

**28.** Reifen nach einem der Ansprüche 1 bis 27, **dadurch gekennzeichnet, dass** er sich in vulkanisiertem Zustand befindet.

Fig. 1

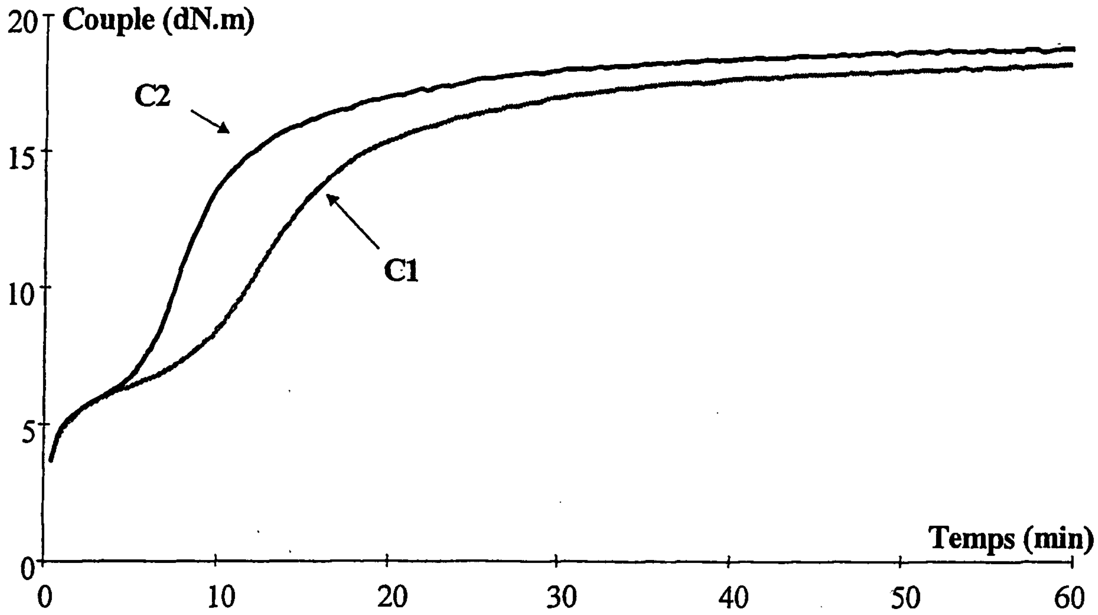
Couple (dN.m)
20
15
10
5
0
C2
C1
Temps (min)
0
10
20
30
40
50
60

Fig. 2

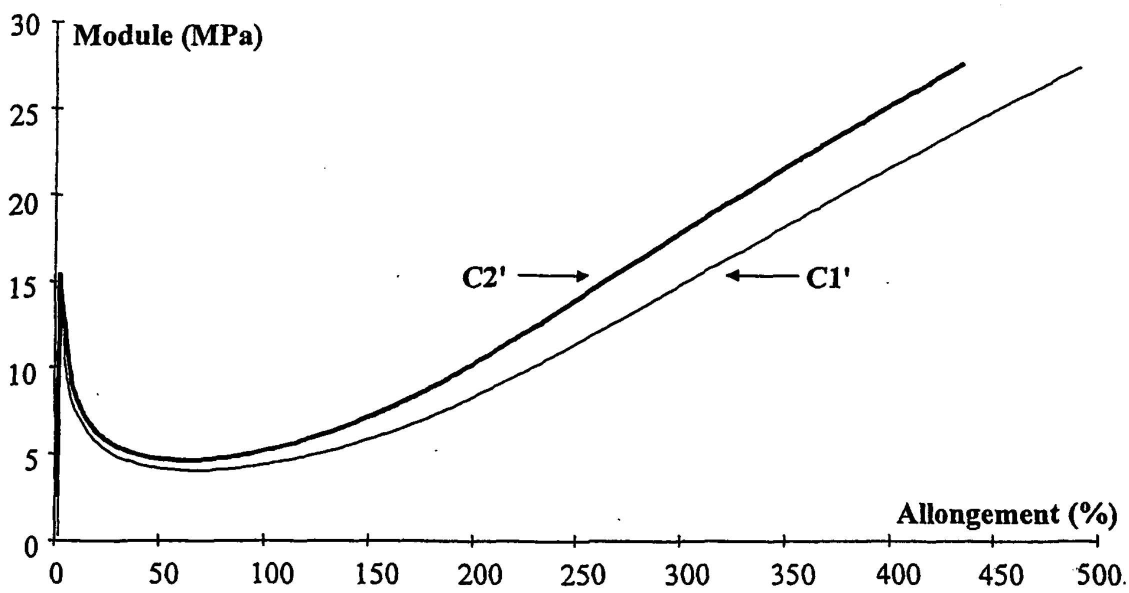
Module (MPa)
30
25
20
15
10
5
0
C2'
C1'
Allongement (%)
0
50
100
150
200
250
300
350
400
450
500

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 501227 A
- US 5227425 A
- EP 735088 A
- US 5852099 A
- EP 810258 A
- US 5900449 A
- EP 881252 A
- WO 9902590 A
- WO 9906480 A
- WO 0005300 A
- WO 0005301 A
- WO 0210269 A
- FR 2094859
- GB 1310379 A
- FR 2206330
- US 3873489 A
- US 4002594 A
- FR 2149339
- US 3842111 A
- US 3997581 A
- US 5652310 A
- US 5684171 A
- US 5684172 A
- EP 0735088 A
- EP 0810258 A

### Littérature non-brevet citée dans la description

- **Brunauer-Emmett-Teller.** *The Journal of the American Chemical Society,* Février 1938, vol. 60, 309